(19) Europäisches Patentamt
European Patent Office
Office européen des brevets

(11) EP 0 786 463 B1

(12) # EUROPÄISCHE PATENTSCHRIFT

(45) Veröffentlichungstag und Bekanntmachung des Hinweises auf die Patenterteilung:
**21.05.2003 Patentblatt 2003/21**

(51) Int Cl.[7]: **C07F 7/08**, C08L 83/08, C08K 5/54, C09J 183/07

(21) Anmeldenummer: **97100991.5**

(22) Anmeldetag: **23.01.1997**

(54) **Vernetzbare Zusammensetzungen**

Crosslinkable compositions

Compositions réticulables

(84) Benannte Vertragsstaaten:
**BE DE ES FR GB IT NL**

(30) Priorität: **25.01.1996 DE 19602663**
**08.08.1996 DE 19631936**

(43) Veröffentlichungstag der Anmeldung:
**30.07.1997 Patentblatt 1997/31**

(73) Patentinhaber: **Wacker-Chemie GmbH**
**81737 München (DE)**

(72) Erfinder:
- **Feichten, Christian Herzig, Dr.**
  **83329 Waging am See (DE)**
- **Deubzer, Bernward, Dr.**
  **84489 Burghausen (DE)**
- **Bloechl, Martina**
  **84367 Tann (DE)**
- **Banfic, Robert**
  **84508 Burgkirchen (DE)**

(74) Vertreter: **Deffner-Lehner, Maria, Dr. et al**
**Wacker-Chemie GmbH,**
**Zentralabteilung PLM,**
**Hanns-Seidel-Platz 4**
**81737 München (DE)**

(56) Entgegenhaltungen:
**EP-A- 0 549 343**

- **CHEMICAL ABSTRACTS, vol. 121, no. 10, 5.September 1994 Columbus, Ohio, US; abstract no. 110669z, ITO, H. ET AL.: "curable organopolysiloxane compositions for release papers" XP002025641 & JP 06 107 949 A (SHIN-ETSU CHEM. IND. CO.)**
- **CHEMICAL ABSTRACTS, vol. 121, no. 15, 10.Oktober 1994 Columbus, Ohio, US; abstract no. 179863a, SATO, S. ET AL.: "preparation of organosilicon compounds" XP002025642 & JP 06 107 671 A (SHIN-ETSU CHEM. IND. CO.)**
- **CHEMICAL ABSTRACTS, vol. 69, no. 15, 7.Oktober 1968 Columbus, Ohio, US; abstract no. 59321h, ANDRIANOV, K.A.: "reactions of tetramethyldisilazanes and tetramethyldisiloxane with allylamines" XP002025643 & IZV. AKAD. NAUK SSSR, SER. KHIM., Nr. 2, 1968, Seiten 351-356,**
- **JOURNAL OF POLYMER SCIENCE, PART A: POLYMER CHEMISTRY, Bd. 32, Nr. 4, 1994, Seiten 683-697, XP002025640 CRIVELLO, J.V. ET AL.: "the synthesis and cationic polymerization of multifunctional silicon-containing epoxy monomers and oligomers"**
- **CHEMICAL ABSTRACTS, vol. 123, no. 5, 31.Juli 1995 Columbus, Ohio, US; abstract no. 56277w, YAMAMOTO, Y. ET AL.: "organic silicon compounds and their manufacture" XP002025644 & JP 00 717 981 A (SHIN-ETSU CHEM. IND. CO,)**
- **CHEMICAL ABSTRACTS, vol. 123, no. 10, 4.September 1995 Columbus, Ohio, US; abstract no. 114070m, KOSAKAI, S.: "silicon compounds as crosslinking agents or as intermediates for polymer modifiers" XP002025645 & JP 00 733 783 A (SHIN-ETSU CHEM. IND CO.)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 786 463 B1

Printed by Jouve, 75001 PARIS (FR)

## Beschreibung

Die Erfindung betrifft vernetzbare Zusammensetzungen enthaltend

(A) Organosiliciumverbindungen, die Reste mit aliphatischen Kohlenstoff-Kohlenstoff-Mehrfachbindungen aufweisen,
(B) Si-gebundene Wasserstoffatome aufweisende Organosiliciumverbindungen,
(C) die Anlagerung von Si-gebundenen Wasserstoff an aliphatische Mehrfachbindung fördernde Katalysatoren

und gegebenenfalls

(D) die Anlagerung von Si-gebundenem Wasserstoff an aliphatische Mehrfachbindung bei Raumtemperatur verzögernde Mittel

sowie die Verwendung der vernetzbaren Zusammensetzungen zur Herstellung von klebrige Stoffe abweisenden Überzügen. Weiterhin betrifft die Erfindung Si-gebundene Wasserstoffatome aufweisende Organosiliciumverbindungen sowie ein Verfahren zu deren Herstellung.

Als Vernetzer für aliphatisch ungesättigte Organopolysiloxane werden nahezu ausschließlich Organopolysiloxane mit Hydrogenmethylsiloxaneinheiten verwendet, im einfachsten Fall mit Triorganosiloxygruppen endblockiertes Hydrogenmethylpolysiloxan. Zur Steigerung der Reaktivität hat es sich bewährt zwischen die Hydrogenmethylsiloxaneinheiten durch Equilibrieren Dimethylsiloxaneinheiten einzubauen. Diese Maßnahmen sind jedoch nur sehr begrenzte Verbesserungen.

Außer diesen auf Hydrogenmethylsiloxaneinheiten basierenden Vernetzern sind auch solche ohne Methylgruppen bekannt. In DE-B 1 955 511 bzw. der korrespondierenden US-A 3,615,272 sind Harze aus Hydrogensiloxaneinheiten, also trifunktionellen Einheiten beschrieben. Zur Verwendung in additionshärtenden Organopolysiloxanzusammensetzungen als Vernetzer sind solche Polymere allerdings nur von sehr eingeschränktem Nutzen, da sie sich kaum in den vernetzbaren Diorganopolysiloxanen lösen.

Aus EP-A 568 318 sind Organopolysiloxane mit trifunktionellen Siloxaneinheiten und monofunktionellen Siloxaneinheiten mit Si-gebundenem Wasserstoff bekannt. Gemäß der EP-A 568 318 werden T-Einheiten in Form von Organosiloxaneinheiten mit Hydrogendimethylsiloxygruppen endgestoppert, wobei zwischen diesen Gruppen eine unterschiedliche Anzahl von Dimethylsiloxan- oder Hydrogenmethylsiloxaneinheiten eingebaut sein kann.

Gemäß DE-A 37 16 372 werden Organopolysiloxane mit Si-gebundenen Wasserstoffatomen und 3 bis 5 Siliciumatomen je Molekül aus $[H(CH_3)_2Si]_2O$ und Trialkoxysilanen in einem hydrolytischen Verfahren hergestellt.

In EP-A 549 343 sind Siloxanverbindungen beschrieben, die Perfluorpolyether- oder Perfluoralkylengruppen in der Kette enthalten und Si-gebundene Wasserstoffatome aufweisen, die mit fluorierten Siliconharzen reagieren können.

Aus Chemical Abstracts, vol.121, abstract no. 110669z und Chemical Abstracts, vol.121, abstract no.179863a ist ein Dimethylhydrogensiloxygruppen aufweisendes 1,2-Disilaethan (1,2-Bis[tris(dimethylhydrogensiloxy)sily]ethan) bekannt.

In Chemical Abstracts, vol.123, abstract no. 56277w sind Dimethylhydrogensiloxygruppen aufweisende Verbindungen beschrieben, die durch Umsetzung von Tetravinylsilan oder 1,1,1,3,3,3-Hexavinyldisiloxan mit Trichlorsilan in Gegenwart eines Platinkatalysators und anschließender Behandlung mit 1,1,3,3-Tetramethyldisiloxan hergestellt werden. Diese Verbindungen enthalten daher in ihrer Carbostruktureinheit Siliciumatome.

Aus Chemical Abstracts, vol.123, abstract no. 114070m sind Dimethylhydrogensiloxygruppen aufweisende Verbindungen bekannt, die Aromaten in der Carbostruktureinheit aufweisen.

In Chemical Abstracts, vol.69, abstract no. 59321h ist die Anlagerung von Tetramethyldisilazanen und Tetramethyldisiloxanen an Allylaminen in Gegenwart von Platinkatalysatoren beschrieben. Es werden Amine mit Dimethylhydrogensiloxygruppen erhalten.

Die Herstellung von Siloxygruppen-enthaltenden epoxyfunktionellen Oligomeren ist in Journal of Polymer Science, Part A: Polymer Chemistry, Bd.32, Nr.4, 1994, Seiten 683-697 beschrieben. Dabei wird ein Diolefin oder Triolefin mit einem $\alpha,\omega$-Si-H-difunktionellen Siloxan hydrosilyliert, wobei als Zwischenprodukt ein Si-H-funktionelles Oligomer erhalten wird, das dann in einer weiteren Hyrdosilylierungsreaktion mit einem Vinylepoxid zu einem epoxyfunktionellen Oligomeren umgesetzt wird. Die epoxyfunktionellen Oligomeren werden in einer kationischen Polymerisation vernetzt.

Es bestand die Aufgabe, Si-gebundene Wasserstoffatome aufweisende Organosiliciumverbindungen bereitzustellen, die mit Organosiliciumverbindungen, die Reste mit aliphatischen Kohlenstoff-Kohlenstoff-Mehrfachbindungen aufweisen, in Gegenwart von die Anlagerung von Si-gebundenem Wasserstoff an aliphatische Mehrfachbindung fördernden Katalysatoren rasch vernetzen, wobei höhere Vernetzungsgeschwindigkeiten als bisher erzielt werden.

Weiterhin bestand die Aufgabe, vernetzbare Zusammensetzungen bereitzustellen, die zur Herstellung von klebrige Stoffe abweisenden Überzügen geeignet sind. Die Aufgabe wird durch die Erfindung gelöst.

Gegenstand der Erfindung sind vernetzbare Zusammensetzungen enthaltend

(A) Organosiliciumverbindungen, die Reste mit aliphatischen Kohlenstoff-Kohlenstoff-Mehrfachbindungen aufweisen

(B) Si-gebundene Wasserstoffatome aufweisende Organosiliciumverbindungen

(C) die Anlagerung von Si-gebundenem Wasserstoff an aliphatische Mehrfachbindung fördernde Katalysatoren und gegebenenfalls

(D) die Anlagerung von Si-gebundenem Wasserstoff an aliphatische Mehrfachbindung bei Raumtemperatur verzögernde Mittel,

dadurch gekennzeichnet, daß als mindestens ein Teil der (B) Si-gebundene Wasserstoffatome aufweisenden Organosiliciumverbindungen Organosiliciumverbindungen ($B^1$) enthaltend

(a) Endeinheiten der allgemeinen Formel

$$H_aR_{3-a}SiO_{1/2} \qquad (I)$$

und gegebenenfalls Endeinheiten der allgemeinen Formel

$$R_3SiO_{1/2} \qquad (I'),$$

wobei R gleich oder verschiedenen ist und einen einwertigen, von aliphatischen Mehrfachbindungen freien, gegebenenfalls halogenierten Kohlenwasserstoffrest mit 1 bis 8 Kohlenstoffatomen je Rest bedeutet und

a 1, 2 oder 3 ist,

mit der Maßgabe, daß mindestens 50 Mol-% der Endeinheiten solche der Formel (I) sind,

(b) Carbostruktureinheiten G (II)

wobei G gleich oder verschieden ist und einen Rest. der allgemeinen Formel

$$R^4(CR^3H\text{-}CH_2\text{-})_x \qquad (II)$$

wobei $R^4$ einen dreiwertigen bis zehnwertigen aliphatisch gesättigten Kohlenwasserstoffrest mit 1 bis 10 Kohlenstoffatomen, der ein oder mehrere Heteroatome ausgewählt aus der Gruppe von Sauerstoff, Bor, Silicium, Zinn und Titan enthalten kann,

$R^3$ ein Wasserstoffatom oder einen Alkylrest mit 1 bis 6 Kohlenstoffatomen je Rest und

x 3, 4, 5, 6, 7, 8, 9 oder 10 ist,

bedeutet,

mit der Maßgabe, daß über G mindestens zwei Si-Atome miteinander verbunden sind,

(c) Einheiten der allgemeinen Formel

$$R_b\overset{|}{Si}O_{\frac{3-b}{2}} \qquad (III)$$

und/oder

$$R_b\overset{|}{\underset{|}{Si}}O_{\frac{2-b}{2}} \qquad (III')$$

wobei R die oben dafür angegebene Bedeutung hat,
b 0, 1 oder 2 ist, mit der Maßgabe, daß b in Formel (III') nicht 2 ist, und
mit der Maßgabe, daß die Einheiten der Formel (III) bzw. (III') über die Si-Atome mit den Carbostruktureinheiten G verbunden sind
und gegebenenfalls

(d) Einheiten der allgemeinen Formel

$$H_cR_dSiO_{\frac{4-c-d}{2}} \qquad (IV)$$

wobei R die oben dafür angegebene Bedeutung hat,
c 0 oder 1 und
d 1 oder 2
und die Summe c+d 1 oder 2 ist,
mit der Maßgabe, daß die Einheiten der Formel (IV) sich zwischen den Einheiten der Formel (III) bzw. (III') und den Endeinheiten der Formel (I) bzw. (I') befinden, und

mit der Maßgabe, daß die Organosiliciumverbindungen ($B^1$) durchschnittlich je Molekül 8 bis 50 Si-gebundene Wasserstoffatome enthalten, verwendet werden.

Gegenstand der Erfindung sind weiterhin vernetzbare Zusammensetzungen, dadurch gekennzeichnet, daß als mindestens ein Teil der (B) Si-gebundene Wasserstoffatome aufweisenden Organosiliciumverbindungen Organosiliciumverbindungen ($B^1$) verwendet werden, herstellbar indem in einem ersten Schritt
aliphatische Mehrfachbindungen aufweisende aliphatische Kohlenwasserstoffverbindungen (1) der allgemeinen Formel

$$R^4(CR^3{=}CH_2)_x$$

wobei $R^4$, $R^3$ und x die oben dafür angegebene Bedeutung haben,
mit Silanen (2) der allgemeinen Formel

$$HR_bSiX_{3-b}$$

wobei R und b die oben dafür angegebene Bedeutung haben und X gleich oder verschieden sein kann, ein Halogenatom oder ein Rest der Formel $-OR^1$ ist, wobei $R^1$ einen Alkylrest mit 1 bis 8 Kohlenstoffatomen je Rest, der durch ein Ethersauerstoffatom substituiert sein kann, bedeutet,
in Gegenwart von die Anlagerung von Si-gebundenem Wasserstoff an aliphatische Mehrfachbindung fördernden Katalysatoren (3) umgesetzt werden
und überschüssige Silane (2) destillativ entfernt werden,
wobei das eingesetzte Verhältnis von Si-gebundenem Wasserstoff in Silan (2) zu aliphatischer Doppelbindung in Kohlenwasserstoffverbindung (1) 1,0 bis 2,0 bzw. zu aliphatischer Dreifachbindung in Kohlenwasserstoffverbindung (1) 2,0 bis 4,0 beträgt,
in einem zweiten Schritt
die so erhaltenen hydrolysefähige Gruppen aufweisenden Verbindungen
mit Silanen (4) der allgemeinen Formel

$$H_aR_{3-a}SiZ$$

oder Siloxanen (5) der allgemeinen Formel

$$H_aR_{3-a}SiOSiR_{3-a}H_a$$

wobei R und a die oben dafür angegebene Bedeutung haben und Z ein Halogenatom oder ein Rest der Formel $-OR^2$, wobei $R^2$ einen einwertigen Kohlenwasserstoffrest mit 1 bis 8 Kohlenstoffatomen je Rest, der durch ein Ethersauerstoffatom substituiert sein kann, bedeutet,
und Wasser in Gegenwart von die Hydrolyse fördernde Katalysatoren (6) umgesetzt werden,
wobei das eingesetzte Verhältnis von Si-Atomen in Silanen (4) oder Siloxanen (5) zu hydrolysefähigen Gruppen in den aus dem ersten Schritt erhaltenen Verbindungen 0,8 bis 5,0 beträgt, und gegebenenfalls in einem dritten Schritt
die so erhaltenen Si-gebundene Wasserstoffatome aufweisenden Organosiliciumverbindungen ($B^1$) mit gegebenenfalls Si-gebundenen Wasserstoffatomen aufweisenden Organopolysiloxanen (7) ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, verzweigten, gegebenenfalls Hydroxylgruppen aufweisenden Organopolysiloxanen, cyclischen Organopolysiloxanen und Mischpolymerisaten aus Diorganosiloxan- und Monoorganosiloxaneinheiten, equilibriert werden, und mit der Maßgabe, daß die so erhaltenen Si-gebundenen Wasserstoffatome aufweisenden Organosiliciumverbindungen ($B^1$) durchschnittlich je Molekül 8 bis 50 Si-gebundene Wasserstoffatome aufweisen.

Gegenstand der Erfindung sind weiterhin Si-gebundene Wasserstoffatome aufweisende Organosiliciumverbindungen ($B^1$) enthaltend

(a) Endeinheiten der allgemeinen Formel

$$H_aR_{3-a}SiO_{1/2} \qquad (I)$$

und gegebenenfalls Endeinheiten der allgemeinen Formel

$$R_3SiO_{1/2} \qquad (I'),$$

wobei R und a die oben dafür angegebene Bedeutung haben, mit der Maßgabe, daß mindestens 50 Mol-% der Endeinheiten solche der Formel (I) sind,

(b) Carbostruktureinheiten G (II)

wobei G gleich oder verschieden ist und einen Rest. der allgemeinen Formel

$$R^4(CR^3H\text{-}CH_2\text{-})_x \qquad (II)$$

wobei R einen dreiwertigen bis zehnwertigen aliphatisch gesättigten Kohlenwasserstoffrest mit 1 bis 10 Kohlenstoffatomen, der ein oder mehrere Heteroatome ausgewählt aus der Gruppe von Sauerstoff, Bor, Silicium, Zinn und Titan enthalten kann,
$R^3$ ein Wasserstoffatom oder einen Alkylrest mit 1 bis 6 Kohlenstoffatomen je Rest und
x 3, 4, 5, 6, 7, 8, 9, oder 10 ist,
bedeutet,
mit der Maßgabe, daß über G mindestens zwei Si-Atome miteinander verbunden sind,

(c) Einheiten der allgemeinen Formel

$$\overset{|}{R_bSi}O_{\frac{3-b}{2}} \quad . \quad (III)$$

und/oder

$$R_bSiO_{\frac{2-b}{2}} \qquad (III')$$

wobei R und b die oben dafür angegebene Bedeutung haben, mit der Maßgabe, daß die Einheiten der Formel (III) bzw. (III') über die Si-Atome mit den Carbostruktureinheiten G verbunden sind
und gegebenenfalls
(d) Einheiten der allgemeinen Formel

$$H_cR_dSiO_{\frac{4-c-d}{2}} \qquad (IV)$$

wobei R, c und d die oben dafür angegebene Bedeutung haben,
mit der Maßgabe, daß die Einheiten der Formel (IV) sich zwischen den Einheiten der Formel (III) bzw. (III') und den Endeinheiten der Formel (I) bzw. (I') befinden, und
mit der Maßgabe, daß die Si-gebundene Wasserstoffatome aufweisenden Organosiliciumverbindungen ($B^1$) durchschnittlich je Molekül 8 bis 50 Si-gebundene Wasserstoffatome enthalten.

Gegenstand der Erfindung ist weiterhin ein Verfahren zur Herstellung der Si-gebundenen Wasserstoffatome aufweisenden Organosiliciumverbindungen ($B^1$), dadurch gekennzeichnet, daß in einem ersten Schritt
aliphatische Mehrfachbindungen aufweisende aliphatische Kohlenwasserstoffverbindungen (1) der allgemeinen Formel

$$R^4(CR^3=CH_2)_x$$

wobei $R^4$, $R^3$ und x die oben dafür angegebene Bedeutung haben,
mit Silanen (2) der allgemeinen Formel

$$HR_bSiX_{3-b}$$

wobei R, X und b die oben dafür angegebene Bedeutung haben, in Gegenwart von die Anlagerung von Si-gebundenem Wasserstoff an aliphatische Mehrfachbindung fördernden Katalysatoren (3) umgesetzt werden
und überschüssige Silane (2) destillativ entfernt werden,
wobei das eingesetzte Verhältnis von Si-gebundenem Wasserstoff in Silan (2) zu aliphatischer Doppelbindung in Kohlenwasserstoffverbindung (1) 1,0 bis 2,0 bzw. zu aliphatischer Dreifachbindung in Kohlenwasserstoffverbindung (1) 2,0 bis 4,0 beträgt,
in einem zweiten Schritt
die so erhaltenen hydrolysefähige Gruppen aufweisenden Verbindungen
mit Silanen (4) der allgemeinen Formel

$$H_aR_{3-a}SiZ$$

oder Siloxanen (5) der allgemeinen Formel

$$H_aR_{3-a}SiOSiR_{3-a}H_a$$

wobei R, Z und a die oben dafür angegebene Bedeutung haben, und Wasser in Gegenwart von die Hydrolyse fördernde Katalysatoren (6) umgesetzt werden,
wobei das eingesetzte Verhältnis von Si-Atomen in Silanen (4) oder Siloxanen (5) zu hydrolysefähigen Gruppen in den aus dem ersten Schritt erhaltenen Verbindungen 0,8 bis 5,0 beträgt, und gegebenenfalls in einem dritten Schritt
die so erhaltenen Si-gebundene Wasserstoffatome aufweisenden Organosiliciumverbindungen ($B^1$) mit gegebenen-

falls Si-gebundene Wasserstoffatome aufweisenden Organopolysiloxanen (7)
ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, verzweigten, gegebenenfalls Hydroxylgruppen aufweisenden Organopolysiloxanen, cyclischen Organopolysiloxanen und Mischpolymerisaten aus Diorganosiloxan- und Monoorganosiloxaneinheiten, equilibriert werden, mit der Maßgabe, daß die so erhaltenen Si-gebundene Wasserstoffatome aufweisenden Organosiliciumverbindungen ($B^1$) durchschnittlich je Molekül 8 bis 50 Si-gebundene Wasserstoffatome aufweisen.

Ein wesentliches Kennzeichen der erfindungsgemäßen, Si-gebundene Wasserstoffatome aufweisenden Organosiliciumverbindungen ($B^1$) ist, daß je Molekül die Gesamtzahl der terminalen Si-gebundenen Wasserstoffatome, also die in den Endeinheiten der Formel (I) enthaltenen Si-gebundenen Wasserstoffatome, größer ist als die Gesamtzahl aller über die Carbostruktureinheit G je Molekül miteinander verbundenen Si-Atome.

Die erfindungsgemäßen, Si-gebundene Wasserstoffatome aufweisenden Organosiliciumverbindungen ($B^1$) weisen eine gute Löslichkeit in dem oben beschriebenen Bestandteil (A) der vernetzbaren Zusammensetzung auf.

Die erfindungsgemäßen, Si-gebundene Wasserstoffatome aufweisenden Organosiliciumverbindungen ($B^1$) besitzen vorzugsweise eine Viskosität von 4 bis 500 $mm^2 \cdot s^{-1}$ bei 25°C, bevorzugt 4 bis 100 $mm^2 \cdot s^{-1}$ bei 25°C, und besonders bevorzugt 4 bis 40 $mm^2 \cdot s^{-1}$ bei 25°C.

Die erfindungsgemäßen, Si-gebundene Wasserstoffatome aufweisenden Organosiliciumverbindungen ($B^1$) enthalten durchschnittlich je Molekül 8 bis 50 Si-gebundene Wasserstoffatome, bevorzugt 6 bis 30 Si-gebundene Wasserstoffatome, besonders bevorzugt 8 bis 25 Si-gebundene Wasserstoffatome.

Die erfindungsgemäßen, Si-gebundene Wasserstoffatome aufweisenden Organosiliciumverbindungen ($B^1$) besitzen ein Hydrogenequivalentgewicht von vorzugsweise 60 bis 300 g pro Mol Si-gebundenen Wasserstoff, bevorzugt 90 bis 150 g pro Mol Si-gebundenen Wasserstoff.

Der Rest R in den Si-gebundenen Wasserstoffatomen aufweisenden Organosiliciumverbindungen ($B^1$) ist frei von aliphatischen Mehrfachbindungen, damit es zu keiner Eigenvernetzung kommt, die zu Unlöslichkeiten führt.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Cycloalkylreste, wie Cyclopentyl-, Cyclohexyl-, Cycloheptylreste und Methylcyclohexylreste; Arylreste, wie der Phenylrest; Alkarylreste, wie o-, m-, p-Tolylreste, Xylylreste und Ethylphenylreste und Aralkylreste, wie der Benzylrest, der $\alpha$- und der $\beta$-Phenylethylrest. Bevorzugt ist der Methylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m-, und p-Chlorphenylrest.

Beispiele für Alkylreste $R^1$ sind der Methyl-, Ethyl-, n- Propyl-, iso-Propyl-, 1-n-Butyl-, 2-n-Butyl-, iso-Butyl-, und tert.-Butylrest. Bevorzugt sind der Methyl- und Ethylrest. Beispiele für Alkylreste $R^1$, die durch ein Ethersauerstoffatom substituiert sind, sind der Methoxyethyl- und Ethoxyethylrest.

Beispiele für Kohlenwasserstoffreste $R^2$ sind Alkylreste, wie der Methyl-, Ethyl-, n- Propyl-, iso-Propyl-, 1-n-Butyl-, 2-n-Butyl-, iso-Butyl-, und tert.-Butylrest, wobei der Methylund Ethylrest bevorzugt ist, und der Rest der Formel $-C(=CH_2)CH_3$. Beispiele für Alkylreste $R^2$, die durch ein Ethersauerstoffatom substituiert sind, sind der Methoxyethyl- und Ethoxyethylrest.

Ein bevorzugtes Beispiel für das Halogenatom X ist das Chloratom.

Beispiele für Reste Z sind -Cl, -Br, $-OCH_3$, $-OC_2H_5$ und $-OC(=CH_2)CH_3$.

a ist bevorzugt 1 oder 2, besonders bevorzugt 1.

b ist bevorzugt 0 oder 1, besonders bevorzugt 0.

c ist bevorzugt 0.

Die Summe von c+d ist bevorzugt 2.

Ein besonders bevorzugtes Beispiel für die Endeinheit der Formel (I) ist die Hydrogendimethylsiloxaneinheit.

Vorzugsweise ist die Carbostruktureinheit G ein zwei- bis zehnwertiger aliphatisch gesättigter Kohlenwasserstoffrest, bevorzugt ein drei- bis zehnwertiger aliphatisch gesättigter Kohlenwasserstoffrest.

x ist insbesondere 3, 4, 5 und 6, besonders bevorzugt 3.

Beispiele für Alkylreste $R^3$ sind der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest und Hexylreste, wie der n-Hexylrest. Bevorzugt ist $R^3$, ein Wasserstoffatom.

Beispiele für dreiwertige Carbostruktureinheiten G sind solche der Formel
$(-CH_2CH_2)_3C_6H_9$

$(-CH_2CH_2)_3C_6H_3$
$(-CH_2CH_2CH_2OCH_2)_3C-CH_2CH_3$
$(-CH_2CH_2CH_2)_3B$
und
$(-CH_2CH_2)_3SnC_4H_9$.

Beispiele für vierwertige Carbostruktureinheiten G sind solche der Formel
$(-CH_2CH_2)_4C_4H_4$
$(-CH_2CH_2)_4Sn$
$(-CH_2CH_2)_4Ti$
$(-CH_2CH_2CH_2O)_2CH-CH(OCH_2CH_2CH_2-)_2$ und

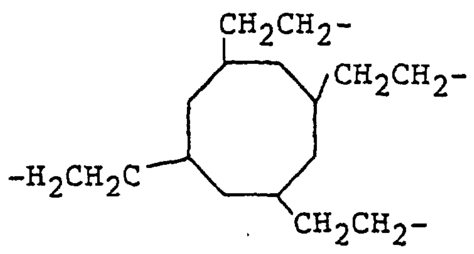

Höherwertige Carbostruktureinheiten G können gesättigte Oligomere von Dienen wie Butadien oder Isopren sein.

Bevorzugt als Carbostruktureinheiten G sind solche mit einer Wertigkeit von 3, 4, 5 und 6, besonders bevorzugt sind dreiwertige Carbostruktureinheiten.

Bevorzugt als Si-gebundene Wasserstoffatome aufweisende Organosiliciumverbindungen ($B^1$) sind solche die aus Einheiten der Formel (I) , G und (III) bestehen.

Beispiele für Si-gebundene Wasserstoffatome aufweisende Organosiliciumverbindungen ($B^1$) sind solche der Formel

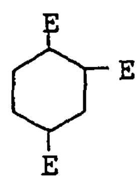 ,

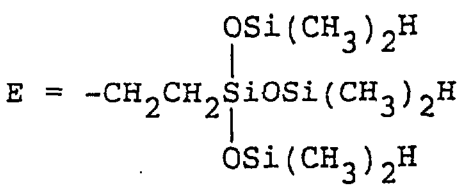

$[(HMe_2SiO)_3SiCH_2CH_2]_2Si(Me)OSi(Me)[CH_2CH_2Si(OSiMe_2H)_3]_2$ und

Die bei dem erfindungsgemäßen Verfahren im ersten Verfahrensschritt eingesetzten Kohlenwasserstoffverbindungen (1) enthalten vorzugsweise drei bis zehn aliphatische Doppelbindungen oder eine aliphatische Dreifachbindung, bevorzugt drei bis sechs aliphatische Doppelbindungen, besonders bevorzugt drei aliphatische Doppelbindungen.

Beispiele für Kohlenwasserstoffverbindung (1) sind 1,2,4-Trivinylcyclohexan, 1,3,5-Trivinylcyclohexan, 1,3,5-Trivinylbenzol, Triallylbor, Trimethylolpropantriallylether, Trivinylmethylsilan, Trivinylbutylzinn, Tetravinylcyclobutan, Tetravinylidencyclobutan, Tetravinyltitan, 1,1,2,2-Tetraallyloxyethan, Cyclooctatetraen, 1,3,5,7-Tetravinylcyclooctan, 1,2-Bis(trivinylsilyl)ethan, Oligobutadien, Oligoisopren.

Beispiele für Silane (2), die bei dem erfindungsgemäßen Verfahren im ersten Verfahrensschritt eingesetzt werden, sind

$HSiCl_3$
$HSiBr_3$
$HSi(OMe)_3$
$HSi(OEt)_3$
$HMeSiCl_2$
$HMeSi(OMe)_2$
$H_2SiCl_2$

Bevorzugte Silane (2) sind $HSiCl_3$ und $H(CH_3)SiCl_2$, wobei $HSiCl_3$ besonders bevorzugt ist.

Bei dem erfindungsgemäßen Verfahren kann im ersten Verfahrensschritt eine Art von Kohlenwasserstoffverbindung (1) oder verschiedene Arten von Kohlenwasserstoffverbindungen (1) eingesetzt werden.

Bei dem erfindungsgemäßen Verfahren kann im ersten Verfahrensschritt eine Art von Silan (2) oder verschiedene Arten von Silan (2) eingesetzt werden.

Bei dem erfindungsgemäßen Verfahren beträgt in dem ersten Verfahrensschritt das Verhältnis von Si-gebundenem Wasserstoff in Silan (2) zu aliphatischer Doppelbindung in der Kohlenwasserstoffverbindung (1) vorzugsweise 1,0 bis 2,0, bevorzugt 1,0 bis 1,5, besonders bevorzugt 1,0 bis 1,2 bzw. das Verhältnis von Si-gebundenem Wasserstoff in Silan (2) zu aliphatischer Dreifachbindung in der Kohlenwasserstoffverbindung (1) vorzugsweise 2,0 bis 4,0, bevorzugt 2,0 bis 3,0, besonders bevorzugt 2,0 bis 2,4.

Als die Anlagerung von Si-gebundenem Wasserstoff an aliphatische Doppelbindung fördernde Katalysatoren (3) können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren (3) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6*6H_2O$, $Na_2PtCl_4*4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6*6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin gemäß US-A 4,292,434, wie das Umsetzungsprodukt aus in 1-Octen gelöstem Platintetrachlorid mit sec.-Butylamin, oder Ammonium-Platinkomplexe gemäß EP-B 110 370.

Der Katalysator (3) wird im ersten Verfahrensschritt vorzugsweise in Mengen von 1 bis 50 Gew.-ppm (Gewichtsteilen je Million Gewichtsteilen), bevorzugt in Mengen von 5 bis 20 Gew.-ppm, jeweils berechnet als elementares Platin und bezogen auf das Gesamtgewicht von Kohlenwasserstoffverbindung (1) und Silan (2) verwendet.

Der erste Verfahrensschritt wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird der erste Verfahrensschritt vorzugsweise bei einer Temperatur von 20°C bis 150°C, bevorzugt 40°C bis 120°C, besonders bevorzugt 60°C bis 120°C durchgeführt.

In dem ersten Verfahrensschritt können inerte, organische Lösungsmittel mitverwendet werden, obwohl die Mitverwendung von inerten, organischen Lösungsmitteln nicht bevorzugt ist. Beispiele für inerte, organische Lösungsmittel sind Toluol, Xylol, Octanisomere, Butylacetat, 1,2-Dimethoxyethan, Tetrahydrofuran und Cyclohexan.

Die gegebenenfalls mitverwendeten inerten organischen Lösungsmittel werden nach dem ersten Verfahrensschritt destillativ entfernt.

Es liegt im Umfang der vorliegenden Erfindung, daß im ersten Verfahrensschritt anstelle der Kohlenwasserstoffverbindung (1) in Kombination mit dem Silan (2) unvollständig umgesetzte Zwischenprodukte aus der Reaktion von (1) mit (2), d.h. Zwischenprodukte, die noch aliphatisch ungesättigte Doppelbindungen aufweisen, eingesetzt werden und mit Silan (2) weiter zum Endprodukt des ersten Verfahrensschrittes umgesetzt werden.

Als Beispiel sei hierfür genannt die Umsetzung von Acetylen mit $HSiCl_3$ zu $Cl_3SiCH_2CH_2SiCl_3$ im ersten Verfahrensschritt. Als Zwischenprodukt entsteht $CH_2{=}CHSiCl_3$, welches als Ausgangsmaterial anstelle von Acetylen verwendet werden kann und umgesetzt mit $HSiCl_3$ zum selben Endprodukt des ersten Verfahrensschrittes, $Cl_3SiCH_2CH_2SiCl_3$, führt.

Als weiteres Beispiel sei hierfür genannt die Umsetzung von 1,5-Hexadien mit $HSi(OEt)_3$ (Et = Ethylrest) zu $(OEt)_3Si(CH_2)_6Si(OEt)_3$ im ersten Verfahrensschritt. Als Zwischenprodukt entsteht $CH_2{=}CH(CH_2)_4Si(OEt)_3$, welches

als Ausgangsmaterial anstelle von 1,5-Hexadien verwendet werden kann und umgesetzt mit $HSi(OEt)_3$ (Et = Ethylrest) zum selben Endprodukt des ersten Verfahrensschrittes, $(OEt)_3Si(CH_2)_6Si(OEt)_3$, führt.

Als weiteres Beispiel sei hierfür genannt die Umsetzung von 1,2,41,2,4-Trivinylcyclohexan mit $HSiCl_3$ zu

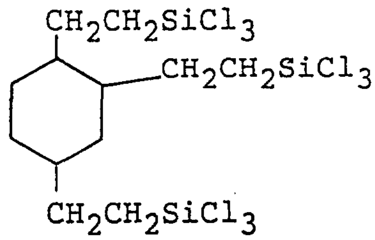

im ersten Verfahrensschritt.

Als Zwischenprodukt entsteht

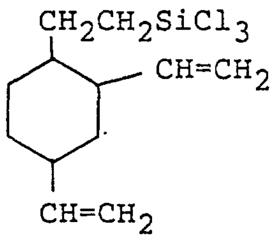

oder

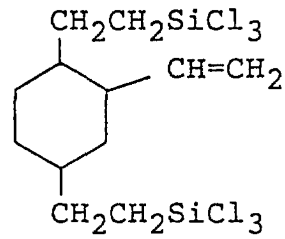

welches als Ausgangsmaterial anstelle von 1,2,4-Trivinylcyclohexan verwendet werden kann und umgesetzt mit $HSiCl_3$ zum selben oben genannten Endprodukt des ersten Verfahrensschrittes führt.

Beispiele für Silane (4), die bei dem erfindungsgemäßen Verfahren im zweiten Verfahrensschritt eingesetzt werden sind Dimethylchlorsilan, Methylchlorsilan, Chlorsilan, Methylbromsilan, Dimethylmethoxysilan, Methylmethoxysilan, Dimethylethoxysilan, Diethylchlorsilan, Dimethylisopropenoxysilan, Methyldiisopropenoxysilan.

Beispiele für Siloxane (5), die bei dem erfindungsgemäßen Verfahren im zweiten Verfahrensschritt eingesetzt werden sind 1,1,3,3-Tetramethyldisiloxan, 1,3-Dimethyldisiloxan, 1,1,1,3,3-Pentamethyldisiloxan, 1,1-Dimethyldisiloxan.

Bei dem erfindungsgemäßen Verfahren kann im zweiten Verfahrensschritt eine Art von Silan (4) oder verschiedene Arten von Silan (4) sowie eine Art von Siloxan (5) oder verschiedene Arten von Siloxan (5) eingesetzt werden.

Die bei dem erfindungsgemäßen Verfahren im zweiten Verfahrensschritt eingesetzten die Hydrolyse fördernde Katalysatoren (6) können dieselben sein mit denen auch bisher die Hydrolyse von hydrolysefähige Gruppen aufweisenden Organosiliciumverbindungen gefördert werden konnte. Als Katalysatoren (6) können Säuren oder Basen eingesetzt werden, wobei die Säuren bevorzugt sind. Beispiele für Säuren sind Salzsäure, Bromwasserstoffsäure, Schwefelsäure, Perchlorsäure, wobei Salzsäure bevorzugt ist. Besonders bevorzugt ist Salzsäure in einer Konzentration von 1 bis 20 %.

Wasser wird im zweiten Verfahrensschritt vorzugsweise in Mengen von 20 bis 200g, bezogen auf Mol Si-gebundener hydrolysefähiger Gruppe X eingesetzt.

Bei dem erfindungsgemäßen Verfahren beträgt im zweiten Verfahrensschritt das Verhältnis von Si-Atomen in Silanen (4) oder Siloxanen (5) zu hydrolysefähigen Gruppen in den aus dem ersten Verfahrensschritt erhaltenen hydrolysefähige Gruppen aufweisenden Verbindungen vorzugsweise 0,8 bis 5,0, bevorzugt 0,8 bis 2,5, besonders bevorzugt 1,0 bis 2,5.

Bevorzugte Vorgehensweisen im zweiten Verfahrensschritt sind entweder ein Vormischen von aus dem ersten Verfahrensschritt erhaltenen Verbindungen mit Silanen (4) und die gemeinsame Cohydrolyse durch Zudosieren dieses Gemisches zu vorgelegter Säure oder die Vermischung von Siloxanen (5) mit Säure und Zudosieren der aus dem ersten Verfahrensschritt erhaltenen Verbindungen.

Der zweite Verfahrensschritt wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird der zweite Verfahrensschritt vorzugsweise bei einer Temperatur von 0°C bis 40°C, bevorzugt 10°C bis 25°C durchgeführt.

Die Aufarbeitung des zweiten Verfahrensschrittes erfolgt vorzugsweise durch Abtrennen der wäßrigen Phase und Waschen mit Wasser und Bicarbonatlösung.

Überschüssiges Silan (4) und Siloxan (5) werden nach dem zweiten Verfahrensschritt vorzugsweise abgetrennt, bevorzugt destillativ entfernt.

In dem zweiten Verfahrensschritt können inerte, organische Lösungsmittel mitverwendet werden. Beispiele für inerte, organische Lösungsmittel sind Cyclohexan, Toluol, Xylole, niedere Ketone, wie Aceton oder Butanon.

Die gegebenenfalls mitverwendeten inerten organischen Lösungsmittel werden nach dem zweiten Verfahrensschritt abgetrennt, vorzugsweise destillativ entfernt.

Die nach dem zweiten Verfahrensschritt erhaltenen Si-gebundene Wasserstoffatome aufweisenden Organosiliciumverbindungen können in einem dritten Verfahrensschritt mit gegebenenfalls Si-gebundene Wasserstoffatome aufweisenden Organosiloxanen (7) equilibriert werden. Wird die Equilibrierung durchgeführt, enthalten die erfindungsgemäßen Si-gebundene Wasserstoffatome aufweisenden Organosiliciumverbindungen vorzugsweise höchstens zehn Einheiten der Formel (IV), bevorzugt höchstens fünf Einheiten der Formel (IV).

Als gegebenenfalls Si-gebundene Wasserstoffatome aufweisende Organopolysiloxane (7) werden vorzugsweise solche ausgewählt aus der Gruppe bestehend aus linearen, endständige Triorganosiloxygruppen aufweisenden Organopolysiloxanen der Formel

$$R_3'SiO(SiR_2'O)_rSiR_3' ,$$

wobei R' die gleiche Bedeutung wie R hat oder ein Wasserstoffatom bedeutet,
r 0 oder eine ganze Zahl im Wert von 1 bis 500, bevorzugt 10 bis 200, ist,
linearen, endständige Hydroxylgruppen aufweisenden Organopolysiloxanen der Formel

$$HO(SiR_2'O)_sH ,$$

wobei R' die oben dafür angegebene Bedeutung hat und
s eine ganze Zahl im Wert von 1 bis 1000, bevorzugt 10 bis 500, ist,
verzweigten, gegebenenfalls Hydroxylgruppen aufweisenden Organopolysiloxanen aus Einheiten der Formel

$$R_3'SiO_{1/2},\ R_2'SiO \text{ und } R'SiO_{3/2},$$

wobei R' die oben dafür angegebene Bedeutung hat,
cyclischen Organopolysiloxanen der Formel

$$(R_2'SiO)_t ,$$

wobei R' die oben dafür angegebene Bedeutung hat und
t eine ganze Zahl von 3 bis 12 ist,
und Mischpolymerisaten aus Einheiten der Formel

$$R_2'SiO \text{ und } R'SiO_{3/2} ,$$

wobei R' die oben dafür angegebene Bedeutung hat, eingesetzt.

Bevorzugte Organopolysiloxane (7) sind die der Formeln

$$R_3'SiO(SiR_2'O)_rSiR_3' \text{ und } HO(SiR_2'O)_sH.$$

Das Mengenverhältnis der bei der gegebenenfalls durchgeführten Equilibrierung eingesetzten Organopolysiloxane (7) und Si-gebundene Wasserstoffatome aufweisenden Organosiliciumverbindungen wird lediglich durch den gewünschten Anteil der Si-gebundenen Wasserstoffatome in den bei der gegebenenfalls durchgeführten Equilibrierung erzeugten Organosiliciumverbindungen und durch die gewünschte mittlere Kettenlänge bestimmt.

Bei dem gegebenenfalls durchgeführten Equilibrieren werden saure Katalysatoren, welche die Equilibrierung

fördern, eingesetzt.

Beispiele für saure Katalysatoren sind Schwefelsäure, Phosphorsäure, Trifluormethansäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat. Bevorzugt sind Phosphornitridchloride. Phosphornitridchloride werden vorzugsweise in Mengen von 5 bis 1000 Gew.-ppm (=Teile je Million), insbesondere 50 bis 200 Gew.-ppm, jeweils bezogen auf das Gesamtgewicht der eingesetzten Organosiliciumverbindungen und eingesetzten Organopolysiloxane (7), verwendet.

Die gegebenenfalls durchgeführte Equilibrierung wird vorzugsweise bei 100°C bis 150°C und beim Druck der umgebenden Atmosphäre, also etwa bei 1020 hPa (abs.) durchgeführt. Falls erwünscht, können aber auch höhere oder niedrigere Drücke angewendet werden. Das Equilibrieren wird vorzugsweise in 5 bis 20 Gew.-%, bezogen auf das Gesamtgewicht der jeweils eingesetzten Organosiliciumverbindungen und eingesetzten Organopolysiloxane (7), mit Wasser nichtmischbarem Lösungsmittel, wie Toluol, durchgeführt. Vor dem Aufarbeiten des bei dem Equilibrieren erhaltenen Gemisches kann der Katalysator unwirksam gemacht werden.

Das erfindungsgemäße Verfahren kann absatzweise, halbkontinuierlich oder vollkontinuierlich durchgeführt werden.

Die die erfindungsgemäßen, Si-gebundene Wasserstoffatome aufweisenden Organosiliciumverbindungen ($B^1$) enthaltenden vernetzbaren Zusammensetzungen werden vorzugsweise zur Herstellung von klebrige Stoffe abweisenden Überzügen, z.B. zur Herstellung von Trennpapieren, verwendet.

Die Herstellung der mit dem Trennpapier verbundenen Selbstklebematerialien erfolgt nach dem off-line Verfahren oder dem in-line Verfahren. Beim off-line Verfahren wird die Siliconzusammensetzung auf das Papier aufgetragen und vernetzt, dann, in einer darauffolgenden Stufe, gewöhnlich nach dem Aufwickeln des Trennpapiers auf eine Rolle und nach dem Lagern der Rolle, wird ein Klebstoffilm, der beispielsweise auf einem Etikettenfacepapier aufliegt, auf das beschichtete Papier aufgetragen und der Verbund wird dann zusammengepreßt. Beim in-line Verfahren wird die Siliconzusammensetzung auf das Papier aufgetragen und vernetzt, der Siliconüberzug wird mit dem Klebstoff beschichtet, das Etikettenfacepapier wird dann auf den Klebstoff aufgetragen und der Verbund schließlich zusammengepreßt.

Als Bestandteil (A) können auch bei den erfindungsgemäßen Zusammensetzungen die gleichen aliphatische Kohlenstoff-Kohlenstoff-Mehrfachbindungen aufweisenden Organosiliciumverbindungen verwendet werden, die bei allen bisher bekannten vernetzbaren Zusammensetzungen aus aliphatische Kohlenstoff-Kohlenstoff-Mehrfachbindungen aufweisenden Organosiliciumverbindungen, Si-gebundene Wasserstoffatome aufweisenden Organosiliciumverbindungen, die Anlagerung von Si-gebundenem Wasserstoff an aliphatische Mehrfachbindung fördernden Katalysatoren eingesetzt werden konnten.

Bei den erfindungsgemäßen Zusammensetzungen kann eine Art von Bestandteil (A) oder verschiedene Arten von Bestandteil (A) eingesetzt werden.

Als Organosiliciumverbindungen (A), die Reste mit aliphatischen Kohlenstoff-Kohlenstoff-Mehrfachbindungen aufweisen, werden vorzugsweise lineare oder verzweigte Organopolysiloxane aus Einheiten der allgemeinen Formel

$$R^5_e R^6_f SiO_{\frac{4-e-f}{2}} \qquad (V)$$

wobei $R^5$ einen einwertigen von aliphatischen Kohlenstoff-Kohlenstoff-Mehrfachbindungen freien Kohlenwasserstoffrest mit 1 bis 18 Kohlenstoffatomen je Rest und
$R^6$ einen einwertigen Kohlenwasserstoffrest mit mindestens einer terminalen aliphatischen Kohlenstoff-Kohlenstoff-Mehrfachbindung mit 2 bis 12 Kohlenstoffatomen je Rest bedeutet,

e 0, 1, 2 oder 3,
f 0, 1 oder 2

und die Summe e+f 0, 1, 2 oder 3 ist,
mit der Maßgabe, daß durchschnittlich mindestens 1 Rest $R^6$ je Molekül, bevorzugt mindestens 2 Reste $R^6$ je Molekül vorliegen, verwendet.

Bevorzugt als Organosiliciumverbindungen (A) sind Organopolysiloxane der allgemeinen Formel

$$R^6_g R^5_{3-g} SiO(SiR^5_2O)_n(SiR^5R^6O)_m SiR^5_{3-g} R^6_g \qquad (VI)$$

wobei $R^5$ und $R^6$ die oben dafür angegebene Bedeutung haben,

g 0, 1 oder 2,
n 0 oder eine ganze Zahl von 1 bis 1500 und
m 0 oder eine ganze Zahl von 1 bis 200 ist,

mit der Maßgabe, daß mindestens ein Rest $R^6$ je Molekül, insbesondere mindestens 2 Reste $R^6$ je Molekül, enthalten sind.

Im Rahmen dieser Erfindung soll Formel (VI) so verstanden werden, daß n Einheiten -($SiR^5_2O$)- und m Einheiten -($SiR^5R^6O$)- in beliebiger Weise im Organopolysiloxanmolekül verteilt sein können.

Als Organosiliciumverbindungen (A) können auch Alkenylgruppen aufweisende Siloxancopolymere, wie sie in US-A 5,241,034 beschrieben sind und die aus Siloxanblöcken und Kohlenwasserstoffblöcken bestehen, verwendet werden. Die in der US-A 5,241,034 beschriebenen Alkenylgruppen aufweisenden Siloxancopolymere gehören daher zum Inhalt der Offenbarung der Anmeldung.

Als Organosiliciumverbindungen (A) können auch aliphatisch ungesättigte Kohlenwasserstoffreste aufweisende Organopolysiloxane, wie sie in der deutschen Patentanmeldung 196 27 022.7 der Anmelderin beschrieben sind, verwendet werden. Die in 196 27 022.7 beschriebenen Organopolysiloxane enthalten trifunktionelle (T) und/oder tetrafunktionelle (Q) Einheiten mit ungesättigten Kohlenwasserstoffresten. Die in 196 27 022.7 beschriebenen Organopolysiloxane gehören daher zum Inhalt der Offenbarung der Anmeldung.

Die Organosiliciumverbindungen (A) besitzen vorzugsweise eine durchschnittliche Viskosität von 100 bis 100 000 mPa·s bei 25°C, bevorzugt 100 bis 10 000 mPa·s bei 25°C, besonders bevorzugt 100 bis 500 mPa.s bei 25°C.

Beispiele für Kohlenwasserstoffreste $R^5$ sind Alkylreste, wie der Methyl-, Ethyl-, n-Propyl-, iso-Propyl-, n-Butyl-, iso-Butyl-, tert.- Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest, Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der $\alpha$- und der $\beta$-Phenylethylrest.

Beispiele für Reste $R^6$ sind Alkenylreste, wie der Vinyl-, 5-Hexenyl-, 2,4-Divinylcyclohexylethyl-, 3,4-Divinylcyclo-hexylethyl-, 2-Propenyl-, 3-Butenyl- und 4-Pentenylrest; und Alkinylreste, wie der Ethinyl- und 2-Propinylrest.

Die erfindungsgemäßen, Si-gebundene Wasserstoffatome aufweisenden Organosiliciumverbindungen ($B^1$) können in den bekannten vernetzbaren Zusammensetzungen aus

(A) Organosiliciumverbindungen, die Reste mit aliphatischen Kohlenstoff-Kohlenstoff-Mehrfachbindungen aufweisen,
(B) Si-gebundene Wasserstoffatome aufweisende Organosiliciumverbindungen und
(C) die Anlagerung von Si-gebundenen Wasserstoff an aliphatische Mehrfachbindung fördernde Katalysatoren

die Si-gebundenen Wasserstoffatome aufweisenden Organosiliciumverbindungen (B) ganz oder teilweise ersetzen.

Werden längere Verarbeitungszeiten gewünscht, können die erfindungsgemäßen vernetzbaren Zusammensetzungen als Bestandteil (B) neben den erfindungsgemäßen Organosiliciumverbindungen ($B^1$) auch andere bekannte Si-gebundene Wasserstoffatome aufweisende Organosiliciumverbindungen ($B^2$) enthalten.

Als Si-gebundene Wasserstoffatome aufweisende Organosiliciumverbindung ($B^2$) können daher vorzugsweise Organopolysiloxane aus Einheiten der Formel

$$H_kR_1SiO_{\frac{4-(k+1)}{2}}$$

wobei R die oben dafür angegebene Bedeutung hat,

k 0 oder 1,
l 0, 1, 2 oder 3 und

die Summe k+l nicht größer als 3 ist,
bevorzugt solche der Formel

$$H_yR_{3-y}SiO(SiR_2O)_o(SiRHO)_pSiR_{3-y}H_y$$

wobei R die oben dafür angegebene Bedeutung hat,

- y 0 oder 1
- o 0 oder eine ganze Zahl von 1 bis 100 und
- p 0 oder eine ganze Zahl von 1 bis 100 ist,

mitverwendet werden.

Beispiele für solche Organopolysiloxane sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxanund Trimethylsiloxaneinheiten, Mischpolymerisate aus Methylhydrogensiloxan-, Diphenylsiloxan- und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogen-siloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxan- und/oder Phenylmethylsiloxaneinheiten.

Längere Verarbeitungszeiten (Topfzeiten) bei gleichzeitig hoher Vernetzungsgeschwindigkeit werden dann erhalten, wenn die erfindungsgemäße Organosiliciumverbindung ($B^1$) in solchen Mengen eingesetzt wird, daß die Menge an Si-gebundenem Wasserstoff vorzugsweise höchstens 50 Gew.-%, bevorzugt 20-50 Gew.-%, besonders bevorzugt 30-40 Gew.-%, jeweils bezogen auf das Gesamtgewicht der Si-gebundenen Wasserstoffatome in den eingesetzten Organosiliciumverbindungen ($B^1$) und ($B^2$), beträgt.

Bestandteil (B) wird vorzugsweise in Mengen von 0,8 bis 5,0, bevorzugt 0,8 bis 2,5, besonders bevorzugt 1,0 bis 2,0 Grammatom Si-gebundenen Wasserstoff je Mol Si-gebundenen Restes mit aliphatischer Kohlenstoff-Kohlenstoff Mehrfachbindung im Bestandteil (A) eingesetzt.

Als die Anlagerung von Si-gebundenem Wasserstoff an aliphatische Doppelbindung förderndem Katalysator (C) können auch bei den erfindungsgemäßen Zusammensetzungen die gleichen Katalysatoren verwendet werden, die auch bei den bisher bekannten Zusammensetzungen zum Vernetzen von aliphatische Mehrfachbindungen enthaltenden Organosiliciumverbindungen mit Verbindungen, die Si-gebundenen Wasserstoff enthalten, zur Förderung der Vernetzung eingesetzt werden konnten. Als Bestandteil (C) werden vorzugsweise die oben genannten Katalysatoren (3) verwendet.

Katalysator (C) wird vorzugsweise in Mengen von 5 bis 500 Gewichts-ppm (Gewichtsteilen je Million Gewichtsteilen), insbesondere 10 bis 200 Gewichts-ppm, jeweils berechnet als elementares Platinmetall und bezogen auf das Gesamtgewicht der Organosiliciumverbindungen (A) und (B) eingesetzt.

Beispiele für weitere Bestandteile, die bei den erfindungsgemäßen Zusammensetzungen mitverwendet werden können, sind die Anlagerung von Si-gebundenem Wasserstoff an aliphatische Mehrfachbindung bei Raumtemperatur verzögernde Mittel, sogenannte Inhibitoren (D), Mittel zur Einstellung der Trennkraft, Lösungsmittel, Haftvermittler und Pigmente.

Als Inhibitoren (D) können auch bei den erfindungsgemäßen Zusammensetzungen alle Inhibitoren verwendet werden, die auch bisher für den gleichen Zweck verwendet werden konnten. Beispiele für Inhibitoren sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung gemäß US-A 3,445,420, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, 3,7-Dimethyl-oct-1-in-6-en-3-ol, Inhibitoren gemäß US-A 2,476,166, wie eine Mischung aus Diallylmaleinat und Vinylacetat, und Inhibitoren gemäß US 4,504,645, wie Maleinsäuremonoester, und Inhibitoren gemäß der deutschen Anmeldung der Anmelderin mit dem Aktenzeichen 19541451.9, wie die Verbindung der Formel $HC{=}C{-}C(CH_3)(OH){-}CH_2{-}CH_2{-}CH{=}C(CH_3)_2$, käuflich erwerblich unter dem Handelsnamen "Dehydrolinalool" bei der Fa. BASF.

Vorzugsweise wird der Inhibitor (D) in Mengen von 0,01 bis 10 Gew.-%, bezogen auf das Gesamtgewicht der Organosiliciumverbindungen (A) und (B), eingesetzt.

Beispiele für Mittel zur Einstellung der Trennkraft der mit den erfindungsgemäßen Zusammensetzungen hergestellten klebrige Stoffe abweisenden Überzüge sind Siliconharze aus Einheiten der Formel

$$R^7(CH_3)_2SiO_{1/2}$$

und $SiO_2$ ,
sogenannte MQ-Harze, wobei $R^7$ ein Wasserstoffatom, ein Methylrest, ein Vinylrest oder ein Rest A, der in der eingangs

zitierten US-A 5,241,034 beschrieben ist und daher zum Inhalt der Offenbarung der Anmeldung gehört, ist, und die Einheiten der Formel $R^7(CH_3)_2SiO_{1/2}$ gleich oder verschieden sein können. Das Verhältnis von Einheiten der Formel $R^7(CH_3)_2SiO_{1/2}$ zu Einheiten der Formel $SiO_2$ beträgt vorzugsweise 0,6 bis 2. Die Siliconharze werden vorzugsweise in Mengen von 5 bis 80 Gew.-%, bezogen auf das Gesamtgewicht der Organosiliciumverbindungen (A) und (B), eingesetzt.

Die bei den erfindungsgemäßen Zusammensetzungen gegebenenfalls mitverwendeten Lösungsmittel können die gleichen Lösungsmittel sein, die bei den bisher bekannten Zusammensetzungen aus Si-gebundene Vinylgruppen ausweisenden Organopolysiloxanen, Si-gebundenen Wasserstoff aufweisenden Organopolysiloxanen und die Anlagerung von Si-gebundenem Wasserstoff an aliphatische Doppelbindung förderndem Katalysator verwendet werden konnten.

Beispiele für solche Lösungsmittel sind Benzine, z. B. Alkangemische mit einem Siedebereich von 80°C bis 110°C bei 1012 mbar (abs.), n-Heptan, Benzol, Toluol und Xylole, halogenierte Alkane mit 1 bis 6 Kohlenstoffatomen, wie Methylenchlorid, Trichlorethylen und Perchlorethylen, Ether, wie Di-n-butylether, Ester, wie Ethylacetat, und Ketone, wie Methylethylketon und Cyclohexanon.

Werden organische Lösungsmittel mitverwendet, so werden sie zweckmäßig in Mengen von 10 bis 95 Gew.-%, bezogen auf das Gewicht der Organosiliciumverbindungen (A), eingesetzt.

Die Reihenfolge beim Vermischen der Bestandteile (A), (B), (C) und gegebenenfalls (D) ist zwar nicht entscheidend, für die Praxis hat es sich jedoch bewährt, den Bestandteil (C), also den Katalysator, dem Gemisch der anderen Bestandteile zuletzt zuzusetzen.

Die Vernetzung der erfindungsgemäßen Zusammensetzungen erfolgt vorzugsweise bei 50°C bis 150°C, bevorzugt 70°C bis 120°C. Ein Vorteil bei den erfindungsgemäßen Zusammensetzungen ist, daß eine rasche Vernetzung schon bei niedrigen Temperaturen erzielt wird. Als Energiequellen für die Vernetzung durch Erwärmen werden vorzugsweise Öfen, z.B. Umlufttrockenschränke, Heizkanäle, beheizte Walzen, beheizte Platten oder Wärmestrahlen des Infrarotbereiches verwendet.

Die erfindungsgemäßen Zusammensetzungen können außer durch Erwärmen auch durch Bestrahlen mit Ultraviolettlicht oder durch Bestrahlen mit UV- und IR-Licht vernetzt werden. Als Ultraviolettlicht wird üblicherweise solches mit einer Wellenlänge von 253,7 nm verwendet. Im Handel gibt es eine Vielzahl von Lampen, die Ultraviolettlicht mit einer Wellenlänge von 200 bis 400 nm aussenden, und die Ultraviolettlicht mit einer Wellenlänge von 253,7 nm bevorzugt emittieren.

Das Auftragen von den erfindungsgemäßen Zusammensetzungen auf die klebrige Stoffe abweisend zu machenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Bei den klebrige Stoffe abweisend zu machenden Oberflächen, die im Rahmen der Erfindung behandelt werden können, kann es sich um Oberflächen beliebiger bei Raumtemperatur und 1012 mbar (abs.) fester Stoffe handeln. Beispiele für derartige Oberflächen sind diejenigen von Papier, Holz, Kork und Kunststoffolien, z. B. Polyethylenfolien oder Polypropylenfolien, gewebtem und ungewebtem Tuch aus natürlichen oder synthetischen Fasern oder Glasfasern, keramischen Gegenständen, Glas, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 $g/m^2$, ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen Zusammensetzungen eignen sich beispielsweise zum Herstellen von Trenn-, Abdeck-, und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck-, und Mitläuferpappen, -folien, und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B. Pappe, Kunstoff, Holz oder Eisen, das bzw. die für Lagerung und/oder Transport von klebrigen Gütern, wie Klebstoffen, klebrigen Lebensmitteln, z. B. Kuchen, Honig, Bonbons und Fleisch, Bitumen, Asphalt, gefetteten Materialien

und Rohgummi, bestimmt ist bzw. sind. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die erfindungsgemäßen Zusammensetzungen eignen sich zur Herstellung der mit dem Trennpapier verbundenen Selbstklebematerialien sowohl nach dem off-line Verfahren als auch nach dem in-line Verfahren.

Beispiel 1

a) Herstellung von 1,2,4 Tris[2-trichlorsilylethyl-]cyclohexan

162 g 1,2,4-Trivinylcyclohexan werden mit 4 mg Pt in Form eines Platin-1,3-Divinyl-1,1,3,3-tetramethyldisiloxan-Komplexes, des sogenannten Karstedt-Katalysators, der im folgenden dem Katalysator entspricht, wie er nach US-A 3,775,452 (ausgegeben am 27.11.1973, Bruce D. Karstedt, General Electric Company) hergestellt wird, versetzt und auf ca. 80°C erwärmt. Es werden über einen Zeitraum von ca. 2 Stunden insgesamt 450 g Trichlorsilan zugetropft, wobei unter Rückfluß die Sumpftemperatur langsam steigt, gegen Ende der Reaktion wieder abfällt. Man kocht den Ansatz noch ca. 1 Stunde auf Rückfluß und destilliert danach flüchtige Bestandteile bei 3 mPa.s bis 100°C ab. Man erhält die Titelsubstanz in nahezu quantitativer Ausbeute (564 g).

b) Herstellung des Carbosiloxanvernetzers 1

167 g 1,1,3,3-Tetramethyldisiloxan werden zusammen mit 100 g Wasser und 20 g konz. HCl bei Raumtemperatur vorgelegt und turbolent gerührt. Unter Kühlung tropft man eine Lösung aus 71 g 1,2,4-Tris[2-trichlorsilylethyl] cyclohexan, dessen Herstellung oben unter a) beschrieben ist, in 24 g Cyclohexan zu, wobei die Innentemperatur 30°C nicht überschreiten sollte. Nach Beendigung des Nachrührens von ca. 1 Stunde, trennt man die wässrige Phase ab, wäscht zweimal mit 100 ml Wasser und danach einmal mit ca. 10%iger Natriumcarbonatlösung. Das Reaktionsgemisch wird bei 110°C und 3 mPa.s einkonzentriert. Man erhält 90g eines klaren Siliconöls mit einer Viskosität von 31 mm/s. Das $^{29}$Si-NMR-Spektrum zeigt eine enge Peakgruppe bei -62 ppm für Alkylsiloxyeinheiten und bei -6ppm für Hydrogendimethylsiloxyeinheiten mit einem Integralverhältnis von 1:2,87. Das Produkt hat die Struktur der Formel

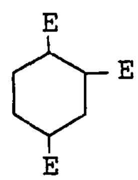

E =

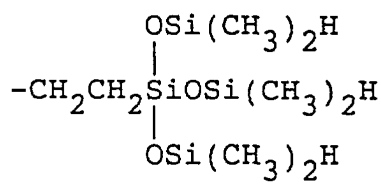

wobei das Produkt höhermolekulare Anteile enthält,
und ist frei von Cl-Si-Verbindungen und
1,1,3,3-Tetramethylsiloxan. Es enthält pro 104 g genau 1,0 g-Atom Si-gebundenen Wasserstoff.

Beispiel 2

100 g eines α,ω-Divinyldimethylpolysiloxans mit 100 Siloxaneinheiten (entsprechend 27 mval C=C) werden mit 0,30 g der Verbindung der Formel
$HC{=}C{-}C(CH_3)(OH){-}CH_2{-}CH_2{-}CH{=}C(CH_3)_2$, welche unter dem Handelsnamen Dehydrolinalool käuflich erwerblich bei der Fa. BASF ist, und 5,4 g des Carbosiloxanvernetzers 1 vermischt. Dazu gibt man 10,5 mg Pt in Form einer Lösung des Karstedt-Katalysators, der in Beispiel 1 unter a) beschrieben ist, in α,ω-Divinyldimethylpolysiloxans mit einer Vis-

kosität von 1000 $mm^2/s$ bei 25°C. Das Verhältnis H-Si/C=C beträgt 1,9. Bei jeweils konstanten Temperaturen werden Wärmefluß/Zeit-Kurven (DSC) dieser Mischung aufgenommen. Die Ergebnisse sind in Tabelle 1 zusammengefaßt.

Tabelle 1

| | | Reaktionsmaximum | Reaktionsende | Gesamtenergie | Peakschärfe* |
|---|---|---|---|---|---|
| Beispiel | 80°C | 23,6 sec. | 37,8 sec. | -30,9 J/g | 1500mW/g·s |
| | 70°C | 30,8 sec. | 44,4 sec. | -30,1 J/g | 700mW/g·s |
| | 60°C | 50,9 sec. | 73,8 sec. | -29,6 J/g | 150mW/g·s |
| | 50°C | 78,0 sec. | 125,4 sec. | -28,5 J/g | 30mW/g·s |
| V1 | 80°C | 995 sec. | 1200 sec. | -29,9 J/g | 5mW/g·s |

* Peakhöhe/Peakbreite in halber Höhe (hoher Wert = große Peakschärfe)

Vergleichsversuch 1 (V1):

Die Arbeitsweise von Beispiel 2 wird wiederholt mit der Abänderung, daß anstelle des Carbosiloxanvernetzers 1 3,3 g eines üblichen H-Siloxanvernetzers aus ca. 40 Hydrogenmethyl- und 2 Trimethylsilyleinheiten verwendet wird. Wie in Beispiel 2 beträgt das Verhältnis H-Si / C=C 1,9. Die Ergebnisse der DSC-Kurven sind in Tabelle 1 zusammengefaßt.

Der Vergleich zeigt, daß obwohl der Endumsatz der aktiven C=C-Doppelbindungen nahezu gleich ist, die Formulierung mit dem Carbosiloxanvernetzer weit schneller das Reaktionsende erreicht. Bei 80°C beträgt die Peakschärfe das 300-fache! Selbst bei 50°C ist die Reaktivität erheblich höher als bei herkömmlicher Formulierung bei 80°C.

Beispiel 3

Die Rezeptur des Beispiels 2 wird mit reduzierter Menge Vernetzer wiederholt, so daß jeweils nur genau 1,0 Mol SiH pro Mol C=C-Doppelbindungen des Vinylpolymers eingesetzt wird. Die DSC-Kurven wurden wiederum bei jeweils konstanten Temperaturen aufgenommen. Die Auswertungen zeigt Tabelle 2.

Tabelle 2

| | | Reaktionsmaximum | Reaktionsende | Gesamtenergie | Peakschärfe* |
|---|---|---|---|---|---|
| Beispiel | 80°C | 32,9 sec. | 59,4 sec. | -21,7 J/g | 370mW/g·s |
| | 70°C | 48,4 sec. | 100,8 sec. | -22,8 J/g | 180mW/g·s |
| | 60°C | 91,7 sec. | 192,0 sec. | -22,5 J/g | 36mW/g·s |
| | 50°C | 192,4 sec. | 292,8 sec. | -15,7 J/g | 8mW/g·s |
| V2 | 80°C | 1250 sec. | 1583 sec. | -15,2 J/g | 1,5mW/g·s |

Vergleichsversuch 2 (V2)

Die Rezeptur des Vergleichsversuches 1 wird mit reduzierter Menge Vernetzer wiederholt, so daß jeweils nur genau 1,0 Mol SiH pro Mol C=C-Doppelbindung des Vinylpolymeren eingesetzt wird. Die Ergebnisse der DSC-Kurven sind in Tabelle 2 zusammengefaßt.

Aufgrund des fehlenden SiH-Überschusses reagieren alle Rezepturen langsamer als in Beispiel 2. Der Vergleich bei 80°C zeigt aber auch hier wieder klar die Überlegenheit des Carbosiloxanverneztes bezüglich Geschwindigkeit und Vollständigkeit der Reaktion.

Beispiel 4:

Es werden folgende Formulierungen bereitet:

| | a | | b | | c | | d | | Vergleichsversuch 3 | |
|---|---|---|---|---|---|---|---|---|---|---|
| | g | mequ | g | mequ | g | mequ | g | mequ | g | mequ |
| **$\alpha,\bar{\omega}$-Divinyl-PDMS** | 40,00 | 10,80 | 40,00 | 10,80 | 40,00 | 10,80 | 40,00 | 10,80 | 40,00 | 10,80 |
| **Dehydrolinalool** | 0,09 | 0,60 | 0,09 | 0,60 | 0,09 | 0,60 | 0,09 | 0,60 | 0,09 | 0,60 |
| **Carbosiloxanvernetzer 1** | 0,40 | 3,80 | 0,56 | 5,40 | 0,72 | 6,90 | 1,68 | 16,20 | -- | -- |
| **Vernetzer B[2]** | 0,81 | 12,40 | 0,70 | 10,80 | 0,60 | 9,30 | -- | -- | 1,05 | 16,20 |
| **Platinkatalysator** | 0,41 | | 0,41 | | 0,41 | | 0,41 | | 0,41 | |

Das α,ω-Divinyldimethylpolysiloxan (= α,$\bar{\omega}$-Divinyl-PDMS) hat eine durchschnittliche Kettenlänge von ca. 100 Si-Atomen. Dehydrolinalool ist erhältlich bei Fa. BASF und hat ein Molekulargewicht von 152.
Vernetzer $B^2$ ist ein Polymerisat aus Hydrogenmethylsiloxyeinheiten mit Trimethylsilylendgruppen und ca. 15,4 Si-H-Gruppen /kg.
Der Platinkatalysator besteht aus Karstedt-Katalysator gelöst in α,$\bar{\omega}$-Divinyl-dimethylpolysiloxan mit 10 g Pt (berechnet als Pt-Metall) pro kg Katalysatorlösung.
Die Konzentration an Si-gebundenen Wasserstoff beträgt in jeder Formulierung das 1,5-fache der C=C-Doppelbindung.
Alle Formulierungen werden nach Auftrag auf superkalandriertem Papier in ca. 4 µm Schichtstärke im Umluftofen bei 70 °C ausgehärtet bzw. bei 80°C (isotherm) ein DSC(Differential Scanning Calorimetry)-Spektrum aufgenommen.

| | a | b | c | d | Vergleichsversuch 3 |
|---|---|---|---|---|---|
| Aushärtung bei 90 °C: | | | | | |
| strichfrei | 9 | 5 | 10 | 5 | >20 |
| (Zeit in sek.) abriebfest | 9 | 4 | 10 | 4 | 20 |
| DSC-Peak nach Sekunden | 300 | 246 | 342 | 24 | >1200 |
| Gelzeit (25°C) | >76 h | 76 h | >76 h | <1 h | >76 h |

Formulierung d) weist sehr gute Aushärtebedingungen auf, aber eine Gelzeit von < 1 h. Gleiche Polymerisationsqualität wird mit Formulierung b) erreicht; hier aber mit einer Gelzeit von mehr als 3 Tagen! Die ausschließliche Verwendung von Vernetzerkomponente $B^2$ (Vergleichsversuch 3) führt dagegen zu vergleichsweise langsamer Aushärtung.

Beispiel 5:

Die Formulierungen aus Beispiel 4b) sowie die Vergleichsformulierung 3 werden bereitet, indem die 90 mg Dehydrolinalool jeweils durch 70 mg 1-Ethinylcyclohexanol ersetzt werden. Die jeweils ca. 50-fachen Ansätze werden im Vergleich auf einer Beschichtungsmaschine getestet. Die Länge des Trockenofens beträgt 4,5 m. Die Umlufttemperatur ist 150°C. Beschichtet wird superkalandriertes Papier "Rhiliner 12" (Firma Rhinelander /USA) in ca. 0,9 mm Schichtstärke. Sofort nach Aushärtung werden die unvernetzten (extrahierbaren) Anteile durch mehrtägige Extraktion durch MIBK (= Methylisobutylketon) bestimmt und mit der jeweiligen Bahngeschwindigkeit korreliert.

| | % Extraktanteile | |
|---|---|---|
| **Bahngeschwindigkeit [m/min]** | **Beispiel 4b** | **Vergleichsversuch 3** |
| 100 (2,70)* | 2,5 | 7,8 |
| 150 (1,80)* | 5,0 | 16,2 |
| 200 (1,35)* | 10,0 | nicht gehärtet |
| 250 (1,08)* | 19,2 | nicht gehärtet |

*) Verweilzeit im Ofen in Sekunden

Die erfindungsgemäße Formulierung ist unter gleichen Bedingungen weitaus besser gehärtet (geringerer Extraktanteil). Ein akzeptables Limit von 5% extrahierbarem Anteil wird unter gegebenen Bedingungen von üblicher Rezeptur bereits bei 65 m/min. erreicht, wogegen die erfindungsmäßige Rezeptur bis 150 m/min. schnell gefahren werden kann.

Beispiel 6:

Unter gleichen Bedingungen wie in Beispiel 5 werden folgende Rezepturen im Vergleich getestet (Gesamt-SiH / C=C gleich 2,0):

| | **Beispiel 4b** | | **Vergleichsversuch 3** | |
|---|---|---|---|---|
| | g | mequ | g | mequ |
| **α,$\bar{\omega}$-Divinyl-PDMS** | 2000 | 540 | 2000 | 540 |

(fortgesetzt)

| | Beispiel 4b | | Vergleichsversuch 3 | |
|---|---|---|---|---|
| | g | mequ | g | mequ |
| **1-Ethinylcyclohexanol** | 5 | 40 | 5 | 40 |
| **Carbosiloxanvernetzer 1** | 38 | 360 | -- | -- |
| **Vernetzer $B^2$** | 47 | 720 | 70 | 1080 |
| **Platin-Katalysator** | 21 | 1,0 | 21 | 1,0 |

| | % Extraktanteile | |
|---|---|---|
| **Bahngeschwindigkeit [m/min]** | **Beispiel 4b** | **Vergleichsversuch 3** |
| 100 | 2,2 | 2,5 |
| 150 | 3,7 | 5,2 |
| 200 | 6,3 | 11,0 |
| 250 | 10,6 | nicht gehärtet |
| 300 | 16,8 | nicht gehärtet |

Auch bei höherem Niveau der Gesamtvernetzermenge im Vergleich zu Beispiel 5 zeigt die erfindungsgemäße Rezeptur (Beispiel 4b) unter sonst gleichen Bedingungen eine weit bessere Aushärtung.

## Patentansprüche

**1.** Vernetzbare Zusammensetzungen enthaltend

(A) Organosiliciumverbindungen, die Reste mit aliphatischen Kohlenstoff-Kohlenstoff-Mehrfachbindungen aufweisen
(B) Si-gebundene Wasserstoffatome aufweisende Organosiliciumverbindungen
(C) die Anlagerung von Si-gebundenem Wasserstoff an aliphatische Mehrfachbindung fördernde Katalysatoren und gegebenenfalls
(D) die Anlagerung von Si-gebundenem Wasserstoff an aliphatische Mehrfachbindung bei Raumtemperatur verzögernde Mittel,

**dadurch gekennzeichnet, daß** als mindestens ein Teil der (B) Si-gebundene Wasserstoffatome aufweisenden Organosiliciumverbindungen Organosiliciumverbindungen ($B^1$) enthaltend

(a) Endeinheiten der allgemeinen Formel

$$H_aR_{3-a}SiO_{1/2} \quad (I)$$

und gegebenenfalls Endeinheiten der allgemeinen Formel

$$R_3SiO_{1/2} \quad (I'),$$

wobei R gleich oder verschiedenen ist und einen einwertigen, von aliphatischen Mehrfachbindungen freien, gegebenenfalls halogenierten Kohlenwasserstoffrest mit 1 bis 8 Kohlenstoffatomen je Rest bedeutet und a 1, 2 oder 3 ist,

mit der Maßgabe, daß mindestens 50 Mol-% der Endeinheiten solche der Formel (I) sind,

(b) Carbostruktureinheiten G (II)

wobei G gleich oder verschieden ist, einen Rest. der allgemeinen Formel

$$R^4(CR^3H\text{-}CH_2\text{-})_x \qquad \text{(II)}$$

wobei $R^4$ einen dreiwertigen bis zehnwertigen aliphatisch gesättigten Kohlenwasserstoffrest mit 1 bis 10 Kohlenstoffatomen, der ein oder mehrere Heteroatome ausgewählt aus der Gruppe von Sauerstoff, Bor, Silicium, Zinn und Titan enthalten kann,

$R^3$ ein Wasserstoffatom oder einen Alkylrest mit 1 bis 6 Kohlenstoffatomen je Rest und

x 3, 4, 5, 6, 7, 8, 9 oder 10 ist,

bedeutet,

(c) Einheiten der allgemeinen Formel

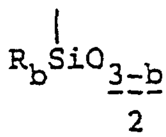

(III)

und/oder

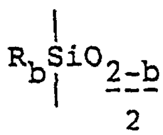

(III')

wobei R die oben dafür angegebene Bedeutung hat,

b 0, 1 oder 2 ist, mit der Maßgabe, daß b in der Formel (III') nicht 2 ist, und

mit der Maßgabe, daß die Einheiten der Formel (III) bzw. (III') über die Si-Atome mit den Carbostruktureinheiten G verbunden sind

und gegebenenfalls

(d) Einheiten der allgemeinen Formel

$$H_cR_dSiO_{\frac{4-c-d}{2}} \qquad \text{(IV)}$$

wobei R die oben dafür angegebene Bedeutung hat,

c 0 oder 1 und

d 1 oder 2

und die Summe c+d 1 oder 2 ist,

mit der Maßgabe, daß die Einheiten der Formel (IV) sich zwischen den Einheiten der Formel (III) bzw. (III') und den Endeinheiten der Formel (I) bzw. (I') befinden, und

mit der Maßgabe, daß die ($B^1$) Si-gebundenen Wasserstoffatome aufweisenden Organosiliciumverbindungen durchschnittlich je Molkül 8 bis 50 Si-gebundene Wasserstoffatome enthalten, verwendet werden.

**2.** Vernetzbare Zusammensetzungen enthaltend

(A) Organosiliciumverbindungen, die Reste mit aliphatischen Kohlenstoff-Kohlenstoff-Mehrfachbindungen aufweisen

(B) Si-gebundene Wasserstoffatome aufweisende Organosiliciumverbindungen

(C) die Anlagerung von Si-gebundenem Wasserstoff an aliphatische Mehrfachbindung fördernde Katalysatoren und gegebenenfalls

(D) die Anlagerung von Si-gebundenem Wasserstoff an aliphatische Mehrfachbindung bei Raumtemperatur verzögernde Mittel,

**dadurch gekennzeichnet, daß** als mindestens ein Teil der (B) Si-gebundene Wasserstoffatome aufweisenden Organosiliciumverbindungen Organosiliciumverbindungen ($B^1$) verwendet werden, herstellbar indem
in einem ersten Schritt
aliphatische Mehrfachbindungen aufweisende aliphatische Kohlenwasserstoffverbindungen (1) der allgemeinen Formel

$$R^4(CR^3{=}CH_2)_x$$

wobei $R^4$, $R^3$ und x die oben dafür angegebene Bedeutung haben, mit Silanen (2) der allgemeinen Formel

$$HR_bSiX_{3-b}$$

wobei R gleich oder verschieden ist und einen einwertigen, von aliphatischen Mehrfachbindungen freien, gegebenenfalls halogenierten Kohlenwasserstoffrest mit 1 bis 8 Kohlenstoffatomen bedeutet,

X gleich oder verschieden sein kann, ein Halogenatom oder ein Rest der Formel $-OR^1$ ist, wobei $R^1$ einen Alkylrest mit 1 bis 8 Kohlenstoffatomen je Rest, der durch ein Ethersauerstoffatom substituiert sein kann, bedeutet und

b 0, 1 oder 2 ist,

in Gegenwart von die Anlagerung von Si-gebundenem Wasserstoff an aliphatische Mehrfachbindung fördernden Katalysatoren (3) umgesetzt werden
und überschüssige Silane (2) destillativ entfernt werden,
wobei das eingesetzte Verhältnis von Si-gebundenem Wasserstoff in Silan (2) zu aliphatischer Doppelbindung in Kohlenwasserstoffverbindung (1) 1,0 bis 2,0 bzw. zu aliphatischer Dreifachbindung in Kohlenwasserstoffverbindung (1) 2,0 bis 4,0 beträgt,
in einem zweiten Schritt
die so erhaltenen hydrolysefähige Gruppen aufweisenden Verbindungen
mit Silanen (4) der allgemeinen Formel

$$H_aR_{3-a}SiZ$$

oder Siloxanen (5) der allgemeinen Formel

$$H_aR_{3-a}SiOSiR_{3-a}H_a$$

wobei R die oben dafür angegebene Bedeutung hat,
Z ein Halogenatom oder ein Rest der Formel $-OR^2$,
wobei $R^2$ einen einwertigen Kohlenwasserstoffrest mit 1 bis 8 Kohlenstoffatomen je Rest, der durch ein Ethersauerstoffatom substituiert sein kann, bedeutet und a 1, 2 oder 3 ist,
und Wasser in Gegenwart von die Hydrolyse fördernde Katalysatoren (6) umgesetzt werden,
wobei das eingesetzte Verhältnis von Si-Atomen in Silanen (4) oder Siloxanen (5) zu hydrolysefähigen Gruppen in den aus dem ersten Schritt erhaltenen Verbindungen 0,8 bis 5,0 beträgt,
und gegebenenfalls in einem dritten Schritt die so erhaltenen Si-gebundene Wasserstoffatome aufweisenden Organosiliciumverbindungen mit gegebenenfalls Si-gebundenen Wasserstoffatomen aufweisenden Organopolysiloxanen (7) (7) ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, verzweigten, gegebenenfalls Hydroxylgruppen aufweisenden Organopolysiloxanen, cyclischen Organopolysiloxanen und Mischpolymerisaten aus Diorganosiloxan- und Monoorganosiloxaneinheiten, equilibriert werden, mit der Maßgabe, daß die so erhaltenen Si-gebundene Wasserstoffatome aufweisenden Organosiliciumverbindungen ($B^1$) durchschnittlich je Molekül 8 bis 50 Si-gebundene Wasserstoffatome aufweisen.

**3.** Verwendung der vernetzbaren Zusammensetzungen nach Anspruch 1 oder 2 zur Herstellung von klebrige Stoffe abweisenden Überzügen.

**4.** Si-gebundene Wasserstoffatome aufweisende Organosiliciumverbindungen ($B^1$) enthaltend

(a) Endeinheiten der allgemeinen Formel

$$H_aR_{3-a}SiO_{1/2} \quad (I)$$

und gegebenenfalls Endeinheiten der allgemeinen Formel

$$R_3SiO_{1/2} \quad (I'),$$

wobei R gleich oder verschiedenen ist und einen einwertigen, von aliphatischen Mehrfachbindungen freien, gegebenenfalls halogenierten Kohlenwasserstoffrest mit 1 bis 8 Kohlenstoffatomen je Rest bedeutet,

a 1, 2 oder 3 ist,

(b) Carbostruktureinheiten G (II)

wobei G gleich oder verschieden ist und einen Rest. der allgemeinen Formel

$$R^4(CR^3H\text{-}CH_2\text{-})_x \quad (II)$$

wobei $R^4$ einen dreiwertigen bis zehnwertigen aliphatisch gesättigten Kohlenwasserstoffrest mit 1 bis 10 Kohlenstoffatomen, der ein oder mehrere Heteroatome ausgewählt aus der Gruppe von Sauerstoff, Bor, Silicium, Zinn und Titan enthalten kann,

$R^3$ ein Wasserstoffatom oder einen Alkylrest mit 1 bis 6 Kohlenstoffatomen je Rest und

x 3, 4, 5, 6, 7, 8, 9 oder 10 ist,

bedeutet,

mit der Maßgabe, daß über G mindestens zwei Si-Atome miteinander verbunden sind,

(c) Einheiten der allgemeinen Formel

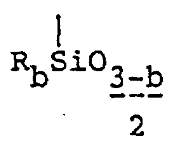

. (III)

und/oder

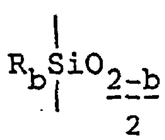

(III')

wobei R die oben dafür angegebene Bedeutung hat,

b 0, 1 oder 2 ist, mit der Maßgabe, daß b in der Formel (III') nicht 2 ist, und

mit der Maßgabe, daß die Einheiten der Formel (III) bzw. (III') über die Si-Atome mit den Carbostruktureinheiten G verbunden sind

und gegebenenfalls

(d) Einheiten der allgemeinen Formel

$$H_cR_dSiO_{\frac{4-c-d}{2}} \quad (IV)$$

wobei R die oben dafür angegebene Bedeutung hat,
c 0 oder 1 und
d 1 oder 2
und die Summe c+d 1 oder 2 ist,
mit der Maßgabe, daß die Einheiten der Formel (IV) sich zwischen den Einheiten der Formel (III) bzw. (III') und den Endeinheiten der Formel (I) bzw. (I') befinden, und
mit der Maßgabe, daß die Si-gebundenen Wasserstoffatome aufweisenden Organosiliciumverbindungen ($B^1$) durchschnittlich je Molekül 8 bis 50 Si-gebundene Wasserstoffatome enthalten.

**5.** Si-gebundene Wasserstoffatome aufweisende Organosiliciumverbindungen ($B^1$) nach Anspruch 4, **dadurch gekennzeichnet, daß** b 0 oder 1 ist.

**6.** Verfahren zur Herstellung der Si-gebundenen Wasserstoffatome aufweisenden Organosiliciumverbindungen ($B^1$) nach Anspruch 4, **dadurch gekennzeichnet, daß** in einem ersten Schritt
aliphatische Mehrfachbindungen aufweisende aliphatische Kohlenwasserstoffverbindungen (1) der allgemeinen Formel

$$R^4(CR^3{=}CH_2)_x$$

wobei $R^4$, $R^3$ und x die oben dafür angegebene Bedeutung haben, mit Silanen (2) der allgemeinen Formel

$$HR_bSiX_{3-b}$$

wobei R gleich oder verschieden ist und einen einwertigen, von aliphatischen Mehrfachbindungen freien, gegebenenfalls halogenierten Kohlenwasserstoffrest mit 1 bis 8 Kohlenstoffatomen bedeutet,

X gleich oder verschieden sein kann, ein Halogenatom oder ein Rest der Formel $-OR^1$ ist, wobei $R^1$ einen Alkylrest mit 1 bis 8 Kohlenstoffatomen je Rest, der durch ein Ethersauerstoffatom substituiert sein kann, bedeutet und
b 0, 1 oder 2 ist,

in Gegenwart von die Anlagerung von Si-gebundenem Wasserstoff an aliphatische Mehrfachbindung fördernden Katalysatoren (3) umgesetzt werden
und überschüssige Silane (2) destillativ entfernt werden, wobei das eingesetzte Verhältnis von Si-gebundenem Wasserstoff in Silan (2) zu aliphatischer Doppelbindung in Kohlenwasserstoffverbindung (1) 1,0 bis 2,0 bzw. zu aliphatischer Dreifachbindung in Kohlenwasserstoffverbindung (1) 2,0 bis 4,0 beträgt,
in einem zweiten Schritt
die so erhaltenen hydrolysefähige Gruppen aufweisenden Verbindungen
mit Silanen (4) der allgemeinen Formel

$$H_aR_{3-a}SiZ$$

oder Siloxanen (5) der allgemeinen Formel

$$H_aR_{3-a}SiOSiR_{3-a}H_a$$

wobei R die oben dafür angegebene Bedeutung hat,
Z ein Halogenatom oder ein Rest der Formel $-OR^2$,
wobei $R^2$ einen einwertigen Kohlenwasserstoffrest mit 1 bis 8 Kohlenstoffatomen je Rest, der durch ein Ethersauerstoffatom substituiert sein kann, bedeutet und a 1, 2 oder 3 ist,

und Wasser in Gegenwart von die Hydrolyse fördernde Katalysatoren (6) umgesetzt werden,
wobei das eingesetzte Verhältnis von Si-Atomen in Silanen (4) oder Siloxanen (5) zu hydrolysefähigen Gruppen in den aus dem ersten Schritt erhaltenen Verbindungen 0,8 bis 5,0 beträgt,
und gegebenenfalls in einem dritten Schritt
die so erhaltenen Si-gebundene Wasserstoffatome aufweisenden Organosiliciumverbindungen mit gegebenenfalls Si-gebundenen Wasserstoffatomen aufweisenden Organopolysiloxanen (7)
ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, verzweigten, gegebenenfalls
Hydroxylgruppen aufweisenden Organopolysiloxanen, cyclischen Organopolysiloxanen und Mischpolymerisaten aus Diorganosiloxan- und Monoorganosiloxaneinheiten, equilibriert werden,
mit der Maßgabe, daß die so erhaltenen Si-gebundene Wasserstoffatome aufweisenden Organosiliciumverbindungen ($B^1$) durchschnittlich je Molkül 8 bis 50 Si-gebundene Wasserstoffatome aufweisen.

**7.** Verfahren nach Anspruch 6, **dadurch gekennzeichnet, daß** als Kohlenwasserstoffverbindung (1) 1,2,4-Trivinylcyclohexan verwendet wird.

## Claims

**1.** Crosslinkable compositions comprising

(A) organosilicon compounds which have radicals containing aliphatic carbon-carbon multiple bonds,
(B) organosilicon compounds having Si-bonded hydrogen atoms,
(C) catalysts which promote the addition of Si-bonded hydrogen onto aliphatic multiple bond, and, if desired,
(D) agents which retard the addition of Si-bonded hydrogen onto aliphatic multiple bond at room temperature,

**characterized in that** at least some of the (B) organosilicon compounds having Si-bonded hydrogen atoms that are used are organosilicon compounds ($B^1$) comprising

(a) terminal units of the general formula

$$H_aR_{3-a}SiO_{1/2} \qquad (I)$$

and, if desired, terminal units of the general formula

$$R_3SiO_{1/2} \qquad (I')$$

in which each R is identical or different and is a monovalent, unsubstituted or halogenated hydrocarbon radical which has 1 to 8 carbon atoms per radical and is free from aliphatic multiple bonds, and
a is 1, 2 or 3,
with the proviso that at least 50 mol-% of the terminal units are those of the formula (I),

(b) carbo structural units G (II)
in which G is identical or different at each occurrence and is a radical of the general formula

$$R^4(CR^3H\text{-}CH_2\text{-})_x \qquad (II)$$

in which $R^4$ is a trivalent to decavalent, aliphatically saturated hydrocarbon radical having 1 to 10 carbon atoms, which may contain one or more heteroatoms selected from the group consisting of oxygen, boron, silicon, tin and titanium,
$R^3$ is a hydrogen atom or an alkyl radical having 1 to 6 carbon atoms per radical, and
x is 2, 3, 4, 5, 6, 7, 8, 9 or 10,
with the proviso that at least two Si atoms are connected to one another via G,

(c) units of the general formula

$$R_b\overset{|}{Si}O_{\frac{3-b}{2}} \qquad (III)$$

and/or

$$R_b\underset{|}{\overset{|}{Si}}O_{\frac{2-b}{2}} \qquad (III')$$

in which R is as defined above, and
b is 0, 1 or 2, with the provisos that b in formula (III') is not 2 and
that the units of the formula (III) or (III') are connected via the Si atoms to the carbo structural units G, and, if desired,

(d) units of the general formula

$$H_cR_dSiO_{\frac{4-c-d}{2}} \qquad (IV)$$

in which R is as defined above,
c is 0 or 1 and
d is 1 or 2
and the sum c+d is 1 or 2,
with the proviso that the units of the formula (IV) are located between the units of the formula (III) or (III') and the terminal units of the formula (I) or (I'), and
with the proviso that the ($B^1$) organosilicon compounds having Si-bonded hydrogen atoms on average contain from 8 to 50 Si-bonded hydrogen atoms per molecule.

**2.** Crosslinkable compositions comprising

(A) organosilicon compounds which have radicals containing aliphatic carbon-carbon multiple bonds,
(B) organosilicon compounds having Si-bonded hydrogen atoms,
(C) catalysts which promote the addition of Si-bonded hydrogen onto aliphatic multiple bond, and, if desired,
(D) agents which retard the addition of Si-bonded hydrogen onto aliphatic multiple bond at room temperature,

**characterized in that** at least some of the (B)
organosilicon compounds having Si-bonded hydrogen atoms that are used are organosilicon compounds ($B^1$) which can be prepared by
in a first step
reacting aliphatic hydrocarbon compounds (1) having aliphatic multiple bonds of the general formula

$$R^4(CR^3{=}CH_2)_x$$

in which $R^4$, $R^3$ and x are as defined above,
with silanes (2) of the general formula

$$HR_bSiX_{3-b}$$

in which each R is identical or different and is a monovalent, unsubstituted or halogenated hydrocarbon radical which has 1 to 8 carbon atoms and is free from aliphatic multiple bonds, and
X can be identical or different at each occurrence and is a halogen atom or a radical of the formula $-OR^1$ in which $R^1$ is an alkyl radical having 1 to 8 carbon atoms per radical, which can be substituted by an ether oxygen atom, and b is 0, 1 or 2,
in the presence of catalysts (3) which promote the addition of Si-bonded hydrogen onto aliphatic multiple bond and removing excess silanes (2) by distillation,
the ratio employed of Si-bonded hydrogen in silane (2) to aliphatic double bond in hydrocarbon compound (1) being from 1.0 to 2.0, and to aliphatic triple bond in hydrocarbon compound (1) being from 2.0 to 4.0, in a second step
reacting the resulting compounds, containing hydrolysable groups,
with silanes (4) of the general formula

$$H_aR_{3-a}SiZ$$

or siloxanes (5) of the general formula

$$H_aR_{3-a}SiOSiR_{3-a}H_a$$

in which R is as defined above and
Z is a halogen atom or a radical of the formula $-OR^2$ in which $R^2$ is a monovalent hydrocarbon radical having 1 to 8 carbon atoms per radical, which can be substituted by an ether oxygen atom,
and a is 1, 2 or 3,
and water in the presence of catalysts (6) which promote hydrolysis,
the ratio employed of Si atoms in silanes (4) or siloxanes (5) to hydrolysable groups in the compounds obtained from the first step being from 0.8 to 5.0, and, if desired, in a third step,
equilibrating the resulting organosilicon compounds having Si-bonded hydrogen atoms with organopolysiloxanes (7) which may contain Si-bonded hydrogen atoms and which are selected from the group consisting of linear organopolysiloxanes containing terminal triorganosiloxy groups, linear organopolysiloxanes containing terminal hydroxyl groups, branched organopolysiloxanes optionally containing hydroxyl groups, cyclic organopolysiloxanes, and copolymers comprising diorganosiloxane and monoorganosiloxane units,
with the proviso that the organosilicon compounds ($B^1$) thus obtained, having Si-bonded hydrogen atoms, possess on average from 8 to 50 Si-bonded hydrogen atoms per molecule.

**3.** Use of the crosslinkable compositions according to Claim 1 or 2 for producing coatings which repel tacky substances.

**4.** Organosilicon compounds ($B^1$) having Si-bonded hydrogen atoms and comprising

(a) terminal units of the general formula

$$H_aR_{3-a}SiO_{1/2} \quad (I)$$

and, if desired, terminal units of the general formula

$$R_3SiO_{1/2} \quad (I')$$

in which each R is identical or different and is a monovalent, unsubstituted or halogenated hydrocarbon radical which has 1 to 8 carbon atoms per radical and is free from aliphatic multiple bonds, and
a is 1, 2 or 3,

(b) carbo structural units G (II)

in which G is identical or different at each occurrence and is a radical of the general formula

$$R^4(CR^3H\text{-}CH_2\text{-})_x \qquad (II)$$

in which $R^4$ is a trivalent to decavalent, aliphatically saturated hydrocarbon radical having 1 to 10 carbon atoms, which may contain one or more heteroatoms selected from the group consisting of oxygen, boron, silicon, tin and titanium,

$R^3$ is a hydrogen atom or an alkyl radical having 1 to 6 carbon atoms per radical, and

x is 2,3, 4, 5, 6, 7, 8, 9 or 10.

with the proviso that at least two Si atoms are connected to one another via G,

(c) units of the general formula

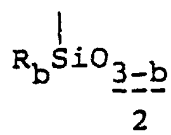 . (III)

and/or

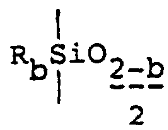 . (III')

in which R is as defined above, and

b is 0, 1 or 2, with the provisos that b in formula (III') is not 2 and

that the units of the formula (III) or (III') are connected via the Si atoms to the carbo structural units G, and, if desired,

(d) units of the general formula

$$H_cR_dSiO_{\frac{4-c-d}{2}} \qquad (IV)$$

in which R is as defined above,

c is 0 or 1 and

d is 1 or 2

and the sum c+d is 1 or 2,

with the proviso that the units of the formula (IV) are located between the units of the formula (III) or (III') and the terminal units of the formula (I) or (I'), and

with the proviso that the organosilicon compounds ($B^1$) having Si-bonded hydrogen atoms on average contain from 8 to 50 Si-bonded hydrogen atoms per molecule.

5. Organosilicon compounds ($B^1$) having Si-bonded hydrogen atoms according to Claim 4, **characterized in that** b is 0 or 1.

6. Process for preparing organosilicon compounds ($B^1$) having Si-bonded hydrogen atoms, according to claim 4, **characterized in that** it comprises
in a first step
reacting aliphatic hydrocarbon compounds (1) having aliphatic multiple bonds of the general formula

$$R^4(CR^3=CH_2)_x$$

in which $R^4$, $R^3$ and x are as defined above, with silanes (2) of the general formula

$$HR_bSiX_{3-b}$$

in which each R is identical or different and is a monovalent, unsubstituted or halogenated hydrocarbon radical which has 1 to 8 carbon atoms and is free from aliphatic multiple bonds, and
X can be identical or different at each occurrence and is a halogen atom or a radical of the formula $-OR^1$ in which $R^1$ is an alkyl radical having 1 to 8 carbon atoms per radical, which can be substituted by an ether oxygen atom, and b is 0, 1 or 2,
in the presence of catalysts (3) which promote the addition of Si-bonded hydrogen onto aliphatic multiple bond and removing excess silanes (2) by distillation,
the ratio employed of Si-bonded hydrogen in silane (2) to aliphatic double bond in hydrocarbon compound (1) being from 1.0 to 2.0, and to aliphatic triple bond in hydrocarbon compound (1) being from 2.0 to 4.0,
in a second step
reacting the resulting compounds, containing hydrolysable groups,
with silanes (4) of the general formula

$$H_aR_{3-a}SiZ$$

or siloxanes (5) of the general formula

$$H_aR_{3-a}SiOSiR_{3-a}H_a$$

in which R is as defined above and
Z is a halogen atom or a radical of the formula $-OR^2$ in which $R^2$ is a monovalent hydrocarbon radical having 1 to 8 carbon atoms per radical, which can be substituted by an ether oxygen atom, and a is 1, 2 or 3,
and water in the presence of catalysts (6) which promote hydrolysis,
the ratio employed of Si atoms in silanes (4) or siloxanes (5) to hydrolysable groups in the compounds obtained from the first step being from 0.8 to 5.0,
and, if desired, in a third step
equilibrating the resulting organosilicon compounds having Si-bonded hydrogen atoms with organopolysiloxanes (7) which may contain Si-bonded hydrogen atoms
and which are selected from the group consisting of linear organopolysiloxanes containing terminal triorganosiloxy groups, linear organopolysiloxanes containing terminal hydroxyl groups, branched organopolysiloxanes optionally containing hydroxyl groups, cyclic organopolysiloxanes, and copolymers comprising diorganosiloxane and monoorganosiloxane units,
with the proviso that the organosilicon compounds ($B^1$) thus obtained, having Si-bonded hydrogen atoms, possess on average from 8 to 50 Si-bonded hydrogen atoms per molecule.

7. Process according to Claim 6, **characterized in that** the hydrocarbon compound (1) used is 1,2,4-trivinylcyclohexane.

## Revendications

1. Compositions réticulables contenant

(A) des composés organosiliciés qui présentent des radicaux avec des liaisons multiples aliphatiques carbone-carbone
(B) des composés organosiliciés présentant des atomes d'hydrogène liés par Si
(C) des catalyseurs favorisant l'addition d'hydrogène lié par Si sur une liaison multiple aliphatique et le cas

échéant

(D) des agents ralentissant à température ambiante l'addition d'hydrogène lié par Si sur une liaison multiple aliphatique,

**caractérisées en ce qu'**on utilise comme au moins une partie des composés organosiliciés (B) présentant des atomes d'hydrogène liés par Si des composés organosiliciés ($B^1$) contenant

(a) des unités terminales de formule générale

$$H_aR_{3-a}SiO_{1/2} \qquad (I)$$

et le cas échéant des unités terminales de formule générale

$$R_3SiO_{1/2} \qquad (I'),$$

dans lesquelles R est identique ou différent et signifie un radical hydrocarboné monovalent, exempt de liaisons multiples aliphatiques, le cas échéant halogéné, comprenant 1 à 8 atomes de carbone par radical et a représente 1, 2 ou 3,

sous réserve qu'au moins 50% en mole des unités terminales soient des unités de formule (I),

(b) des unités de structure carbonée G (II)

G étant identique ou différent et signifiant un radical de formule générale

$$R^4(CR^3H\text{-}CH_2\text{-})_x \qquad (II)$$

dans laquelle $R^4$ représente un radical hydrocarboné trivalent à décavalent aliphatiquement saturé comprenant 1 à 10 atomes de carbone, qui peut contenir un ou plusieurs hétéroatomes choisis parmi le groupe constitué par l'oxygène, le bore, le silicium, l'étain et le titane,

$R^3$ représente un atome d'hydrogène ou un radical alkyle comprenant 1 à 6 atomes de carbone par radical et x représente 3, 4, 5, 6, 7, 8, 9 ou 10,

sous réserve qu'au moins deux atomes de Si soient liés l'un à l'autre via G,

(c) des unités de formule générale

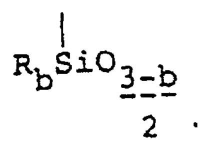
(III)

et/ou

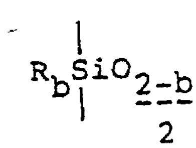
(III')

dans lesquelles R a la signification susmentionnée,

b représente 0, 1 ou 2, sous réserve que b dans la formule (III') ne soit pas 2, et

sous réserve que les unités de formule (III) ou, selon le cas, (III') soient liées via les atomes de Si aux unités de structure carbonée G

et le cas échéant

(d) des unités de formule générale

$$H_cR_dSiO_{\frac{4-c-d}{2}} \quad (IV)$$

dans laquelle R a la signification susmentionnée,
c représente 0 ou 1 et
d représente 1 ou 2
et la somme c+d représente 1 ou 2,
sous réserve que les unités de formule (IV) se trouvent entre les unités de formule (III) ou, selon le cas, (III') et les unités terminales de formule (I) ou, selon le cas, (I') et
sous réserve que les composés organosiliciés ($B^1$) présentant les atomes d'hydrogène liés par Si contiennent en moyenne par molécule 8 à 50 atomes d'hydrogène liés par Si.

**2.** Compositions réticulables contenant

(A) des composés organosiliciés qui présentent des radicaux avec des liaisons multiples aliphatiques carbone-carbone,
(B) des composés organosiliciés présentant des atomes d'hydrogène liés par Si,
(C) des catalyseurs favorisant l'addition d'hydrogène lié par Si sur une liaison multiple aliphatique et le cas échéant
(D) des agents ralentissant à température ambiante l'addition d'hydrogène lié par Si sur une liaison aliphatique multiple,

**caractérisées en ce qu'**on utilise comme au moins une partie des composés organosiliciés (B) présentant des atomes d'hydrogène liés par Si des composés organosiliciés ($B^1$) pouvant être préparés **en ce qu'**on transforme dans une première étape des composés hydrocarbonés (1) aliphatiques présentant des liaisons multiples aliphatiques de formule générale

$$R^4(CR^3=CH_2)_x$$

dans laquelle $R^4$, $R^3$ et x ont la signification susmentionnée
avec des silanes (2) de formule générale

$$HR_bSiX_{3-b}$$

dans laquelle R est identique ou différent et signifie un radical hydrocarboné monovalent, exempt de liaisons multiples aliphatiques, le cas échéant halogéné comprenant 1 à 8 atomes de carbone
X peut être identique ou différent et représente un atome d'halogène ou un radical de formule $-OR^1$, $R^1$ signifiant un radical alkyle comprenant 1 à 8 atomes de carbone par radical, qui peut être substitué par un atome d'oxygène éther et
b représente 0, 1 ou 2,
en présence des catalyseurs (3) favorisant l'addition d'hydrogène lié par Si sur une liaison multiple aliphatique
et les silanes (2) en excès sont éliminés par distillation, le rapport utilisé d'hydrogène lié par Si dans le silane (2) à double liaison aliphatique dans le composé hydrocarboné (1) étant 1,0 à 2,0 ou, selon le cas, à triple liaison aliphatique dans le composé hydrocarboné (1) étant 2,0 à 4,0,
qu'on transforme dans une deuxième étape les composés ainsi obtenus présentant des groupements aptes à l'hydrolyse
avec des silanes (4) de formule générale

$$H_aR_{3-a}SiZ$$

ou des siloxanes (5) de formule générale

$$H_aR_{3-a}SiOSiR_{3-a}H_a$$

dans lesquelles R a la signification susmentionnée,
Z représente un atome d'halogène ou un radical de formule $-OR^2$,
$R^2$ signifiant un radical hydrocarboné monovalent comprenant 1 à 8 atomes de carbone par radical, qui peut être substitué par un atome d'oxygène éther, et a représente 1, 2 ou 3,
et de l'eau en présence des catalyseurs (6) favorisant l'hydrolyse,
le rapport utilisé d'atomes de Si dans les silanes (4) ou siloxanes (5) à groupements aptes à l'hydrolyse dans les composés obtenus de la première étape étant de 0,8 à 5,0 et qu'on équilibre le cas échéant dans une troisième étape les composés organosiliciés présentant des atomes d'hydrogène liés par Si ainsi obtenus avec des organopolysiloxanes (7) présentant le cas échéant des atomes d'hydrogène liés par Si choisis parmi le groupe constitué des organopolysiloxanes linéaires présentant des groupements triorganosiloxy en position terminale, des organopolysiloxanes linéaires présentant des groupements hydroxyle en position terminale, des organopolysiloxanes ramifiés, présentant le cas échéant des groupements hydroxyle, des organopolysiloxanes cycliques et des polymères mixtes d'unités diorganosiloxane et monoorganosiloxane, sous réserve que les composés organosiliciés ($B^1$) présentant des atomes d'hydrogène liés par Si ainsi obtenus présentent en moyenne par molécule 8 à 50 atomes d'hydrogène liés par Si.

**3.** Utilisation des compositions réticulables selon la revendication 1 ou 2 pour la préparation de revêtements répulsifs aux substances adhésives.

**4.** Composés organosiliciés ($B^1$) présentant des atomes d'hydrogène liés par Si contenant

(a) des unités terminales de formule générale

$$H_aR_{3-a}SiO_{1/2} \qquad (I)$$

et le cas échéant des unités terminales de formule générale

$$R_3SiO_{1/2} \qquad (I'),$$

dans lesquelles R est identique ou différent et signifie un radical hydrocarboné monovalent, exempt de liaisons multiples aliphatiques, le cas échéant halogéné comprenant 1 à 8 atomes de carbone par radical,
a représente 1, 2 ou 3,
(b) des unités de structure carbonée G (II)
G étant identique ou différent et signifiant un radical de formule générale

$$R^4(CR^3H\text{-}CH_2\text{-})_x \qquad (II)$$

dans laquelle $R^4$ représente un radical hydrocarboné trivalent à décavalent aliphatiquement saturé comprenant 1 à 10 atomes de carbone, qui peut contenir un ou plusieurs hétéroatomes choisis parmi le groupe constitué par l'oxygène, le bore, le silicium, l'étain et le titane,
$R^3$ représente un atome d'hydrogène ou un radical alkyle comprenant 1 à 6 atomes de carbone par radical et x représente 3, 4, 5, 6, 7, 8, 9 ou 10,
sous réserve qu'au moins deux atomes de Si soient liés l'un à l'autre via G,
(c) des unités de formule générale

$$R_b\overset{|}{Si}O_{\frac{3-b}{2}} \qquad (III)$$

et/ou

$$R_b\overset{|}{\underset{|}{Si}}O_{\frac{2-b}{2}} \qquad (III')$$

dans lesquelles R a la signification susmentionnée,
b représente 0, 1 ou 2, sous réserve que b dans la formule (III') ne soit pas 2, et
sous réserve que les unités de formule (III) ou, selon le cas, (III') soient liées via les atomes de Si aux unités de structure carbonée G
et le cas échéant
(d) des unités de formule générale

$$H_cR_dSiO_{\frac{4-c-d}{2}} \qquad (IV)$$

dans laquelle R a la signification susmentionnée,
c représente 0 ou 1 et
d représente 1 ou 2
et la somme c+d représente 1 ou 2,
sous réserve que les unités de formule (IV) se trouvent entre les unités de formule (III) ou, selon le cas, (III') et les unités terminales de formule (I) ou, selon le cas, (I') et
sous réserve que les composés organosiliciés ($B^1$) présentant les atomes d'hydrogène liés par Si contiennent en moyenne par molécule 8 à 50 atomes d'hydrogène liés par Si.

**5.** Composés organosiliciés ($B^1$) présentant des atomes d'hydrogène liés par Si selon la revendication 4, **caractérisés en ce que** b représente 0 ou 1.

**6.** Procédé pour la préparation des composés organosiliciés ($B^1$) présentant des atomes d'hydrogène liés par Si selon la revendication 4, **caractérisé en ce qu'**on transforme dans une première étape des composés hydrocarbonés (1) aliphatiques présentant des liaisons multiples aliphatiques de formule générale

$$R^4(CR^3=CH_2)_x$$

dans laquelle $R^4$, $R^3$ et x ont la signification susmentionnée
avec des silanes (2) de formule générale

$$HR_bSiX_{3-b}$$

dans laquelle R est identique ou différent et signifie un radical hydrocarboné monovalent, exempt de liaisons multiples aliphatiques, le cas échéant halogéné comprenant 1 à 8 atomes de carbone
X peut être identique ou différent et représente un atome d'halogène ou un radical de formule $-OR^1$, $R^1$ signifiant un radical alkyle comprenant 1 à 8 atomes de carbone par radical, qui peut être substitué par un atome d'oxygène éther et
b représente 0, 1 ou 2,
en présence des catalyseurs (3) favorisant l'addition d'hydrogène lié par Si sur une liaison multiple aliphatique
et les silanes (2) en excès sont éliminés par distillation, le rapport utilisé d'hydrogène lié par Si dans le silane (2) à double liaison aliphatique dans le composé hydrocarboné (1) étant 1,0 à 2,0 ou, selon le cas, à triple liaison aliphatique dans le composé hydrocarboné (1) étant 2,0 à 4,0,
qu'on transforme dans une deuxième étape les composés ainsi obtenus présentant des groupements aptes à l'hydrolyse
avec des silanes (4) de formule générale

$$H_aR_{3-a}SiZ$$

ou des siloxanes (5) de formule générale

$$H_aR_{3-a}SiOSiR_{3-a}H_a$$

dans lesquelles R a la signification susmentionnée,
Z signifie un atome d'halogène ou un radical de formule $-OR^2$,
$R^2$ signifiant un radical hydrocarboné monovalent comprenant 1 à 8 atomes de carbone par radical, qui peut être substitué par un atome d'oxygène éther, et
a représente 1, 2 ou 3,
et de l'eau en présence des catalyseurs (6) favorisant l'hydrolyse,
le rapport utilisé d'atomes de Si dans les silanes (4) ou siloxanes (5) à groupements aptes à l'hydrolyse dans les composés obtenus de la première étape étant de 0,8 à 5,0 et qu'on équilibre le cas échéant dans une troisième étape les composés organosiliciés présentant des atomes d'hydrogène liés par Si ainsi obtenus avec des organopolysiloxanes (7) présentant le cas échéant des atomes d'hydrogène liés par Si choisis parmi le groupe constitué des organopolysiloxanes linéaires présentant des groupements triorganosiloxy en position terminale, des organopolysiloxanes linéaires présentant des groupements hydroxyle en position terminale, des organopolysiloxanes ramifiés, présentant le cas échéant des groupements hydroxyle, des organopolysiloxanes cycliques et des polymères mixtes d'unités diorganosiloxane et monoorganosiloxane, sous réserve que les composés organosiliciés ($B^1$) présentant des atomes d'hydrogène liés par Si ainsi obtenus présentent en moyenne par molécule 8 à 50 atomes d'hydrogène liés par Si.

7. Procédé selon la revendication 6, **caractérisé en ce qu'**on utilise comme composé hydrocarboné (1) du 1,2,4-trivinylcyclohexane.